# EUROPEAN PATENT APPLICATION

(11) **EP 2 051 451 A1**
(43) Date of publication of application: **22.04.2009**
(21) Application number: 07806940.8
(22) Date of filing: 07.09.2007
(51) Int. Cl.: H04L 12/46

(54) **COMMUNICATION APPARATUS, COMMUNICATION METHOD AND COMMUNICATION SYSTEM**

(30) Priority: 22.09.2006 JP 2006257604
(71) Applicant: Panasonic Corporation, Kadoma-shi Osaka 571-8501 (JP)
(72) Inventor: HAMAMOTO, Moe, c/o Panasonic Corporation, Osaka 540-6207 (JP); KOKADO, Takeshi, c/o Panasonic Corporation, Osaka 540-6207 (JP)
(74) Representative: Gassner, Wolfgang
(86) International application number: PCT/JP2007/067508
(87) International publication number: WO 2008/035578

(57) **Abstract**

A communication apparatus (10) transmits to a server (001) three address information check requests 1 to 3 whose destination port numbers are set to be [SP1] and whose source port numbers are set to be respective [LP1] to [LP3] different from each other. The communication apparatus (10) also transmits a P2P communication preparation packet whose source port number is set to be one of [LP1] to [LP3], to a destination different from the server (001), between the address information check requests 1 and 3. The communication apparatus (10) determines the NAT characteristic of a router (101) based on port numbers [GP11], [GP12] and [GP14] of the router (101) notified of by address information check responses 1 to 3.

## Description

### TECHNICAL FIELD

The present invention relates to a communication apparatus, a communication system and a communication method. More particularly, the present invention relates to a communication apparatus, a communication system and a communication method capable of checking the address translation characteristic of a router and establishing a P2P communication channel between two different private networks.

### BACKGROUND ART

In general, in order to identify communication terminals and communication devices (hereinafter collectively referred to as "communication apparatuses") connected to a network, the communication apparatuses are given IP addresses. IP addresses that are uniquely determined in all connected networks and allow one-to-one communication (peer-to-peer communication: hereinafter referred to as "P2P communication") are referred to as global IP addresses. Also, IP addresses that are uniquely determined only in a specific network and cannot be directly used for P2P communication with other networks are referred to as private IP addresses. A network in which communication apparatuses are distinguished from each other using private IP addresses is referred to as a private network.

In order to allow a communication apparatus connected to a private network (a communication apparatus having a private IP address) to communicate with a communication apparatus (a communication apparatus having a global IP address) connected to a global network, a communication device (router) that has a Network Address Translation (hereinafter referred to as "NAT".) function or a Network Address Port Translation (hereinafter referred to as "NAPT") function is generally connected between the private network and the global network. Note that, for the sake of simplicity of description, NAT and NAPT are collectively referred to as "NAT"

The router, when first receiving a packet that is transmitted from an in-home apparatus connected to the private network to an out-of-home apparatus connected to the global network, generates a rule for translating the private address of the source apparatus into the global address of the router, and a rule for receiving its return packet, and stores the generated rules as a NAT rule. In the subsequent communication, the router performs mutual address translation between a packet received from the out-of-home apparatus and a packet received from the in-home apparatus in accordance with the stored NAT rule, and transfers the received packet to the in-home apparatus or the out-of-home apparatus. Note that the generated NAT rule is held in the router during execution of communication, and is automatically deleted when communication packets are interrupted for a predetermined time.

However, this NAT may interfere with P2P communication between a communication apparatus having a private IP address and a communication apparatus connected to a different private network.
This is because, if a communication apparatus transmits a packet while simply designating a private address possessed by an apparatus on the other end of communication, the transmitted packet cannot be transferred via the Internet, in which a packet is identified based on a global IP address, and therefore, does not reach the other end of communication.

As a technique for causing two communication apparatuses connected via a router to different private networks to establish a P2P communication channel over the NAT of the router, a method of using STUN (Simple Traversal UDP through NAT: RFC3489) is known. Note that, as used herein, a "packet" refers to an "UDP packet".

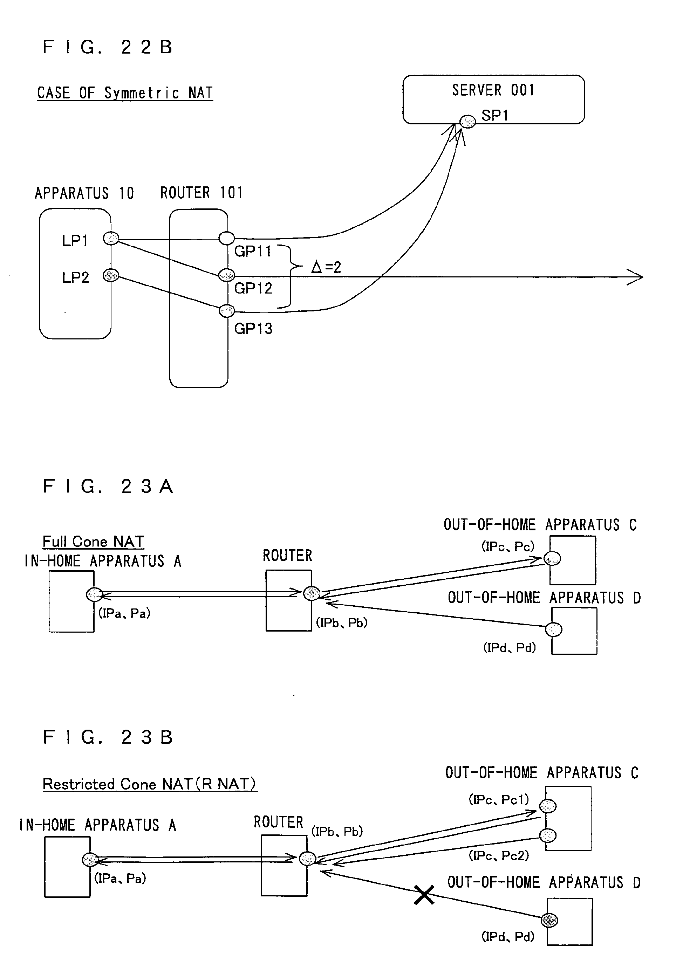

Firstly, types of NAT will be described with reference to FIGS. 23A to 23E before describing a technique of establishing a P2P communication channel using STUN. Note that a private network is not limited to construction as a network at home (i.e., an in-home network), and may be constructed as an in-company network. Hereinafter, for the sake of convenience of description, it is assumed that a private network is an in-home network, though the description below is also true of a large-scale private network that is constructed in a company. Also, as viewed from an in-home private network, a network different from the in-home network is referred to as an out-of-home network or an external network. Moreover, for the sake of convenience of description, a combination of an IP address [IP] and a port number [P] is represented by (IP, P).

FIG. 23A is a diagram for describing NAT called Full Cone NAT.

A router having the Full Cone NAT characteristic invariably assigns the same port number to packets that are transmitted from a specific port number of an in-home apparatus having a private address to an out-of-home apparatus. For example, the router invariably assigns a port number [Pb] to packets transmitted by an in-home apparatus A (IPa, Pa), and transfers the packets to an out-of-home apparatus C connected to an external network. Also, the router having the Full Cone NAT characteristic transfers all packets transmitted toward (IPb, Pb) by an out-of-home apparatus connected to an external network, to the in-home apparatus (IPa, Pa). Therefore, the router also transfers packets transmitted toward (IPb, Pb) by an out-of-home apparatus D (IPd, Pd), to the in-home apparatus A (IPa, Pa).

FIG. 23B is a diagram for describing NAT called Restricted Cone NAT (hereinafter referred to as "R NAT").

A router having the R NAT characteristic invariably assigns the same port number [Pb] to packets transmitted toward an out-of-home network by an in-home apparatus A (IPa, Pa). Note that the router having the R NAT characteristic transfers to the in-home apparatus A (IPa, Pa) only packets transmitted toward (IPb, Pb) by an out-of-home apparatus C (having an IP address IPc) that is a destination of packets output by the out-of-home apparatus A, in which point the router having the R NAT characteristic is different from the router having the Full Cone NAT characteristic. Therefore, the router does not transfer to the in-home apparatus A a packet transmitted toward (IPb, Pb) by an out-of-home apparatus D that is not a destination of a packet transmitted by the in-home apparatus A. Note that the router having the R NAT characteristic transfers a received packet of any source port number to the in-home apparatus A if the source IP address of the received packet is [IPc]. Therefore, the router also transfers to the in-home apparatus A a packet transmitted f rom a port [Pc2] of the out-of-home apparatus C to (IPb, Pb).

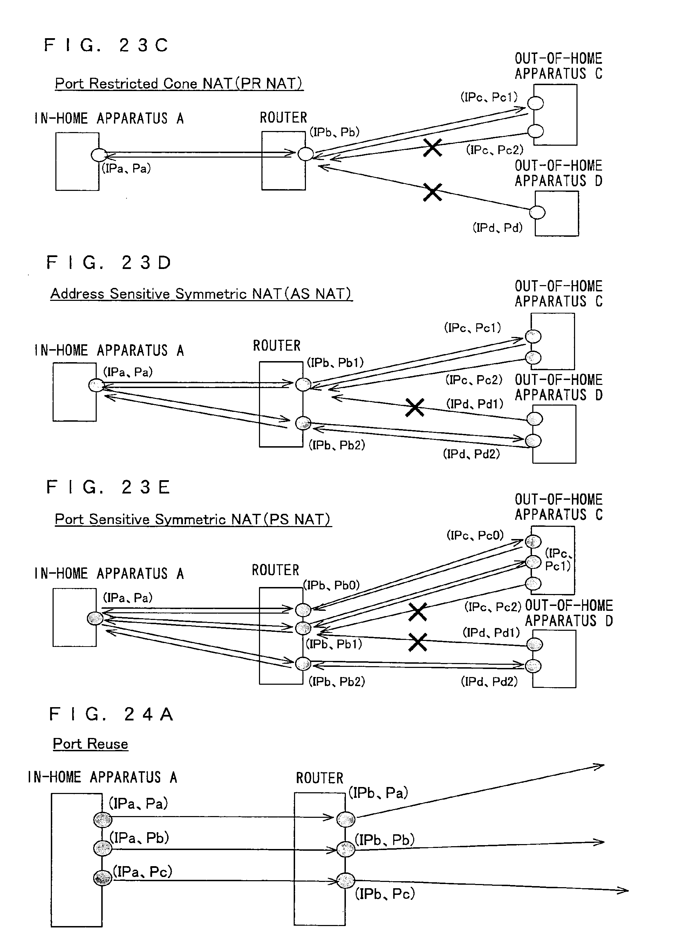

FIG. 23C is a diagram for describing a NAT characteristic called Port Restricted Cone NAT (hereinafter referred to as "PR NAT").

A router having the PR NAT characteristic invariably assigns the same port number [Pb] to packets transmitted toward an out-of-home network by an in-home apparatus A (IPa, Pa). Note that the router having the PR NAT characteristic transfers to the in-home apparatus A (IPa, Pa) only packets transmitted from a destination (IPc, Pc1) of packets transmitted by the in-home apparatus A to (IPb, Pb), in which point the router having the PR NAT characteristic is different from the router having the R NAT characteristic. Therefore, the router abandons not only packets transmitted from a source (IPd, Pd) of an out-of-home apparatus D, but also packets from a source (IPc, Pc2) of an out-of-home apparatus.

Hereinafter, the aforementioned Full Cone NAT, R NAT and PR NAT are collectively referred to as "Cone NAT".

FIG. 23D is a diagram for describing NAT called Adress Sensitive Symmetric NAT (hereinafter referred to as "AS NAT".

The router having the AS NAT characteristic assigns different port numbers to respective destination IP addresses of packets transmitted by an in-home apparatus A. For example, a port number [Pb1] is assigned to a packet transmitted from the in-home apparatus A (IPa, Pa) to an out-of-home apparatus C (IPc, Pc), and a port number [Pb2] is assigned to a packet transmitted from the in-home apparatus A (IPa, Pa) to an out-of-home apparatus D (IPd, Pd) having an IP address different from that of the out-of-home apparatus C. Also, the router having the AS NAT characteristic transfers only packets transmitted from an out-of-home apparatus assigned a certain port number to the in-home apparatus A (IPa, Pa), and abandons all packets transmitted from out-of-home apparatuses that are not assigned the port number. For example, the router transfers to the in-home apparatus A (IPa, Pa) apacketaddressedto (IPb, Pb1) transmittedfromanout-of-home apparatus C having an IP address [IPc], and abandons a packet addressed to (IPb, Pb1) transmitted from an out-of-home apparatus D having an IP address [IPd].

FIG. 23E is a diagram for describing NAT called Port Sensitive Symmetric NAT (hereinafter referred to as "PS NAT").

A router having the PS NAT characteristic assigns different port numbers to respective combinations of destination IP addresses and destination port numbers of packets transmitted by an in-home apparatus A, and sends out the received packets to a network. For example, the router assigns a port number [Pb0] to a destination (IPc, Pc0) of a packet transmitted from the in-home apparatus A (IPa, Pa), a port number [Pb1] to a destination (IPc, Pc1), and a port number [Pb2] to a destination (IPc, Pc2). Also, the router transfers a packet transmitted from an out-of-home apparatus assigned a certain port number to the in-home apparatus A, and abandons all packets transmitted from those other than the out-of-home apparatus assigned the port number. Therefore, the router transfers a packet transmitted from the source (IPc, Pc1) toward the port number [Pb1] as a destination to the in-home apparatus A, and abandons all packets transmitted from the source (IPc, Pc2) and a source (IPd, Pd1) to the port number [Pb1].

Hereinafter, the aforementioned AS NAT and PS NAT are collectively referred to as "Symmetric NAT".

Also, apart from the aforementioned Cone NAT and Symmetric NAT, a router having a property to set NAT using the same port number as that of an in-home apparatus is known.

FIG. 24A is a diagram for describing an outline of a Port Reuse characteristic.

As shown in FIG. 24A, a router assigns a port number [Pa] to a packet whose source is a port number [Pa] of an in-home apparatus A, a port number [Pb] to a packet whose source is a port number [Pb] of the in-home apparatus A, and a port number [Pc] to a packet whose source is a port number [Pc] of the in-home apparatus A. Thus, a characteristic that a communication device assigns a packet including a certain source port number the same port number as the source port number, is referred to as "Port Reuse".

Port Reuse is a characteristic different from the aforementioned NAT characteristics. Therefore, a communication device having the Port Reuse characteristic inevitably has any of the aforementioned NAT characteristics.

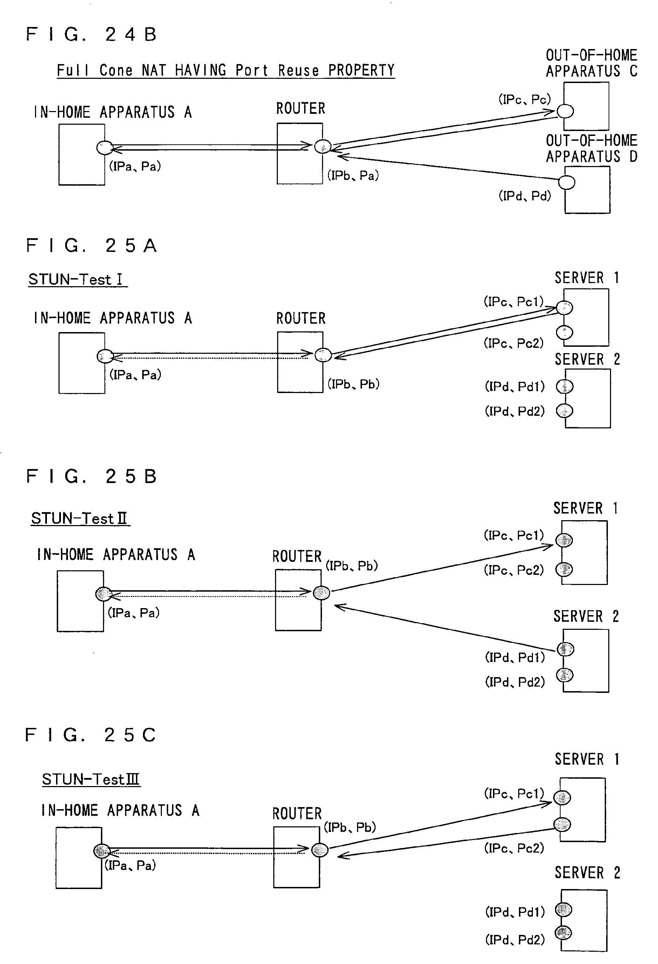

FIG. 24B is a diagram for describing a function of a router having the Port Reuse characteristic.

When the router of FIG. 24B simultaneously has the Port Reuse characteristic and the Full Cone NAT characteristic, the router invariably assigns a port number [Pa] to packets whose source IP address and source port number are set to be (IPa, Pa), and sends out the packets to an external network. Also, the router transfers to an in-home apparatus A all packets addressed to (IPb, Pa) transmitted by an out-of-home apparatus connected to an external network.

Next, a method of using STUN so as to establish a P2P communication channel over NAT of a router will be described.

In order to establish, via a router, a P2P communication channel between two communication apparatuses that are connected to different private networks, each apparatus needs to set a destination IP address and a destination port number in a packet. However, as described above, an address translation method varies, depending on the NAT characteristic of a router. Therefore, a communication apparatus needs to set the destination of a packet, taking the NAT characteristic of a router into consideration.

Therefore, in order to establish a P2P communication channel, initially, the NAT characteristic of a router to which a communication apparatus is connected is checked in accordance with a method defined in STUN. More specifically, in STUN, the communication apparatus transmits a test packet to each of two servers having different IP addresses. Thereafter, the router determines whether or not port numbers assigned to the respective test packets are equal to each other, thereby determining whether the NAT characteristic of the router is Cone NAT or Symmetric NAT.

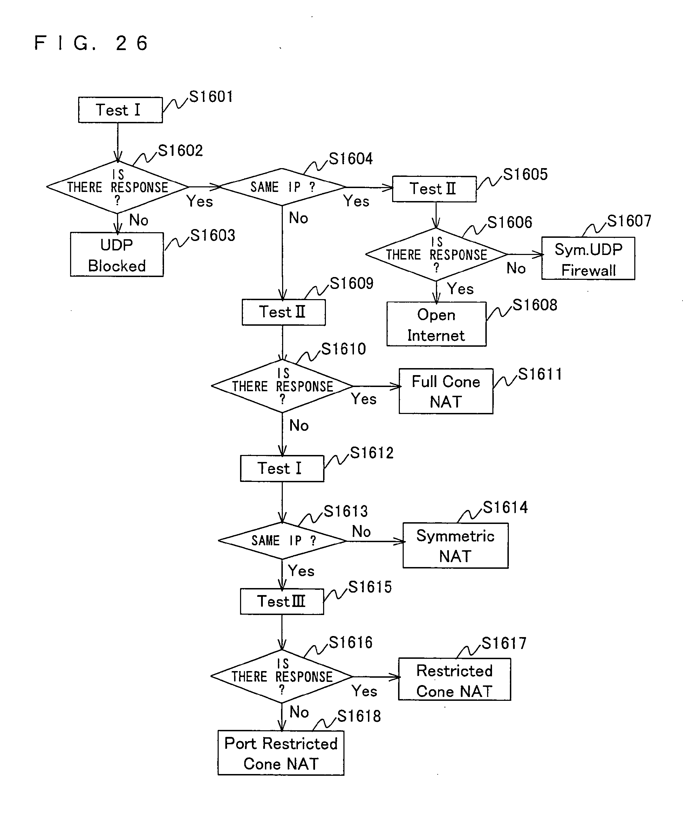

Hereinafter, a method for checking a NAT characteristic using STUN will be described with reference to FIGS. 25A to 25C and 26.

FIG. 25A is a diagram schematically showing STUN-TestI.

In TestI, an in-home apparatus A transmits a packet whose source is (IPa, Pa) to a server 1 (IPc, Pc1). The server 1 references the packet transmitted from the in-home apparatus A, and transmits to the in-home apparatus A a packet whose source port number is set to be [Pc1] and includes as a destination a port number [Pb] assigned by a router.

FIG. 25B is a diagram schematically showing STUN-TestII.

In TestII, an in-home apparatus A transmits a packet whose source is (IPa, Pa) and whose destination is (IPc, Pc1) of a server 1. On the other hand, a server 2 transmits to the in-home apparatus A a packet whose source is set to be (IPd, Pd1) and whose destination is set to be a port number [Pb] assigned by a router.

FIG. 25C is a diagram schematically showing STUN-TestIII.

In TestIII, an in-home apparatus A transmits a packet whose source is (IPa, Pa) and whose destination is (IPc, Pc1) of a server 1. The server 1 transmits to the in-home apparatus A a packet whose source port number is set to be [Pc2] different from [Pc1] and which includes as a destination a port number [Pb] assigned by a router.

FIG. 26 is a flowchart for checking a NAT characteristic using STUN.

Initially, an in-home apparatus A executes the aforementioned TestI (step S1601) to determine whether or not a response has been received from a server 1 (step S1602). The in-home apparatus A, when receiving a response from the server 1, goes to step S1604, and when otherwise, determines that UDP communication with the server 1 is not possible (step S1603).

The in-home apparatus A, when receiving a response from the server 1 (Yes in step S1601), determines whether or not an IP address [IPb] after address translation included in the received response packet matches its own IP address [IPa] (step S1604). The in-home apparatus A, when the IP address [IPb] included in the response packet matches its own IP address [IPa], goes to step S1605, and when otherwise, goes to step S1609. The match between the IP addresses [IPb] and [IPa] means that the in-home apparatus A is connected to an external network without via a router, and NAT is not performed between the in-home apparatus A and the server 1.

When the result of step S1604 is Yes, the in-home apparatus A executes TestII (step S1605) to determine whether or not a response from a server 2 has been received (step S1606). The in-home apparatus A, when receiving a response from the server 2 (Yes in step S1606), determines that a packet can also be received from a communication apparatus other than the destination apparatus (server 1), i.e., the in-home apparatus A is open to a network (step S1608). On the other hand, the in-home apparatus A, when not receiving a response from the server 2 (No in step S1606), determines that transmission and reception of a packet are limited by an UDP firewall (step S1607).

When the result of TestI indicates that the IP address [IPb] and [IPa] donotmatch (NoinstepS1604), the in-home apparatus AexecutesTestII (step S1609) to determine whether or not a response has been received from the server 2 different from the packet destination (stepS1610). The in-home apparatus A, when receiving a response from the server 2 (Yes in step S1610), determines that a router to which the in-home apparatus A is connected has the Full Cone NAT characteristic (step S1611). On the other hand, the in-home apparatus A, when not receiving a response from the server 2 (No in step S1610), executes TestI with respect to the server 2 (step S1612). Here, it is assumed that the router assigns a port number [Pb'] to a packet transmitted from the in-home apparatus A. The in-home apparatus A determines whether or not a combination (IPb, Pb') of an IP address and a port number set by NAT that are included in a response packet received from the server 2 in step S1612 matches a combination (IPb, Pb) of an IP address and a port number set by NAT that are included in a response packet received from the server 1 in step S1601 (step S1613). The in-home apparatus A, when determining that (IPb, Pb') matches (IPb, Pb) (Yes in step S1613), goes to step S1615. The in-home apparatus A, when determining that (IPb, Pb') does not match (IPb, Pb) (No in step S1613), determines that the router to which the in-home apparatus A is connected has the Symmetric NAT characteristic (step S1614).

When the result of step S1613 is Yes, the in-home apparatus A executes TestIII (step S1615) to determine whether or not a response has been received from the server 1 (step S1616) . The in-home apparatus A, when receiving a response from the server 1 (Yes in step S1616), determines that the router to which the in-home apparatus A is connected has the R NAT characteristic (step S1617), and when otherwise, determines that the router to which the in-home apparatus A is connected has the PR NAT characteristic (step S1618).

As described above, in the method defined in STUN, NAT characteristics are checked by executing some of the three kinds of tests of FIGS. 25A to 25C in combination in accordance with the process flow of FIG. 26.

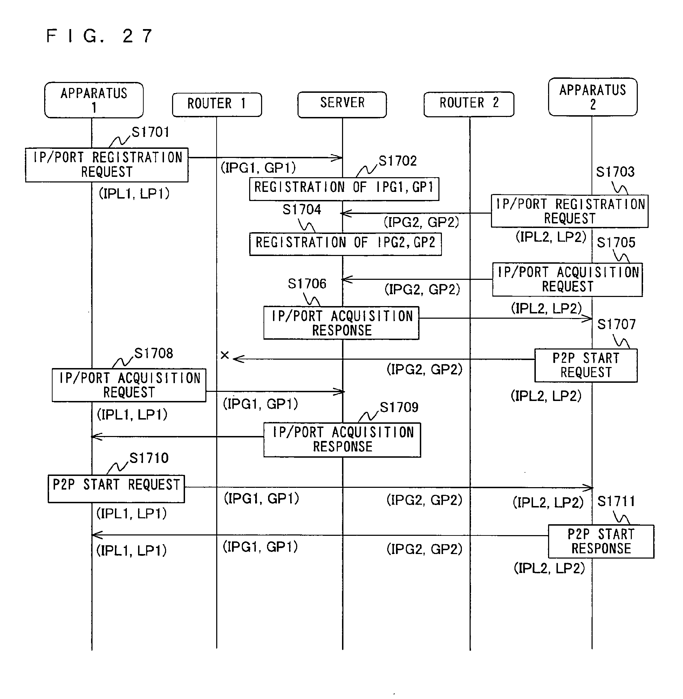

Also, STUN further defines a technique of establishing a P2P communication channel between two communication apparatuses when it is determined as a result of the aforementioned NAT characteristic check that the two communication apparatuses are both connected to a router having the Cone NAT characteristic. Hereinafter, the P2P communication channel establishing technique defined in STUN will be described with reference to FIG. 27.

FIG. 27 is a sequence diagram showing the P2P communication channel establishing method using STUN.

Initially, an apparatus 1 transmits an IP/port registration request packet for requesting registration of an IP address and a port number, via a router 1, to a server (step S1701) . The router 1 address-translates the source of the packet received from the apparatus 1 from (IPL1, LP1) to (IPG1, GP1), and transmits the address-translated packet to the server. The server registers the source IP address IPG1 and the source port number GP1 included in the packet received from the router 1 (step S1702).

Similarly, an apparatus 2 transmits an IP/port registration request packet via a router 2 to the server (step S1703). The router 2 address-translates the source of the packet received from the apparatus 2 from (IPL2, LP2) to (IPG2, GP2), and transmits the address-translated packet to the server 2. The server registers the source IP address IPG1 and the source port number GP1 included in the packet received from the router 2 (step S1704).

Next, the apparatus 2 transmits to the server an IP/port acquisition request for requesting transmission of an IP address and a port number of the apparatus 1, so as to acquire information required for P2P communication with the apparatus 1 (step S1705). In response to the IP/port acquisition request from the apparatus 2, the server returns to the apparatus 2 an IP/port acquisition response packet including a combination (IPG1, GP1) of an IP address and a port number that the router 1 has assigned to the source (IPL1, LP1) of the apparatus 1 (step S1706).

The apparatus 2 references the packet received from the server to acquire the IP address and the port number (IPG1, GP1), which are used so as to access the apparatus 1. Therefore, the apparatus 2 transmits a P2P start request packet whose destination is (IPG1, GP1) (step S1707).

Here, the response of the router 1 to the P2P start request packet transmitted from the apparatus 2 varies, depending on the NAT characteristic of the router 1.

Initially, when the router 1 executes Full Cone NAT (FIG. 23A), the router 1 transfers a P2P request packet transmitted from the apparatus 2 to the apparatus 1, so that a P2P communication channel is established between the apparatuses 1 and 2.

Next, when the router 1 executes R NAT (FIG. 23B) or PR NAT (FIG. 23C), the router 1 abandons the P2P start request packet transmitted from the apparatus 2. Therefore, the P2P start request packet is not transferred to the apparatus 1 (IPL1, LP1).

It should be here noted that the router 2 having the Cone NAT characteristic sets NAT so that, by transferring to the router 1 a packet whose source is set to be (IPL2, LP2) and whose destination is set to be (IPG1, GP1), the router 2 can receive a response packet from the router 1. Specifically, when the router 2 executes Full Cone NAT, the router 2 sets NAT so that the router 2 transfers to the apparatus 2 (IPL2, LP2) packets transmitted to the router 2 (IPG2, GP2) by all out-of-home apparatuses. When the router 2 has the R NAT characteristic, the router 2 sets NAT so that the router 2 transfers a packet whose source IP address is [IPG1] to the apparatus 2 (IPL2, LP2). When the router 2 has the PR NAT characteristic, the router 2 sets NAT so that the router 2 transfers a packet whose source IP address and source port number are (IPG1, GP1) to the apparatus 2 (IPL2, LP2). As a result, if the router 2 next receives a packet whose source IP address and source port number are (IPG1, GP1), the router 2 can transfer the packet to the apparatus 2, so that a state is achieved in which a P2P communication channel can be established between the apparatuses 1 and 2.

Therefore, the apparatus 1 transmits an IP/port acquisition request to the server so as to acquire information required to access the apparatus 2 (step S1708). In response to the IP/port acquisition request from the apparatus 1, the server returns to the apparatus 2 a packet including the IP address and the port number (IPG2, GP2) assigned to the source (IPL1, LP1) of the apparatus 1 by the router 2, as an IP/port acquisition response (step S1709).

The apparatus 1 references the IP/port acquisition response received from the server to acquire the IP address and the port number (IPG2, GP2) of the router 2 assigned to the IP address and the port number (IPL2, PL2) of the apparatus 2.

Next, the apparatus 1 transmits a P2P start request packet whose source is set to be (IPL1, LP1) to the apparatus 2 (step S1710). As described above, at this stage, the router 2 transfers the packet whose source IP address and source port number are (IPL1, LP1) to the apparatus 2 without abandoning it. On the other hand, the router 1 can set NAT so that, by transferring the packet whose source is set to be (IPL1, LP1) to the router 2, the router 1 can receive a response packet from the router 2. Specifically, when the router 1 executes R NAT, the router 1 sets NAT so that the router 1 transfers a packet whose source IP address is [IPG2] to the apparatus 1 (IPL1, LP1). When the router 1 executes PR NAT, the router 1 sets NAT so that the router 1 transfers a packet whose source IP address and source port number are (IPG2, GP2) to the apparatus 2 (IPL2, LP2).

Therefore, when the apparatus 2 transmits a P2P start response packet to the apparatus 1 in response to the P2P start request packet from the apparatus 1 (step S1711), a P2P communication channel is established between the apparatuses 1 and 2.

According to a technique using STUN as described above, when two communication apparatuses connected to different private networks are both connected to a router having the Cone NAT characteristic, a P2P communication channel can be established between the two communication apparatuses.

However, when two communication apparatuses are connected via Symmetric NAT, a P2P communication channel cannot be established using the technique employing STUN. Hereinafter, the reason will be described.

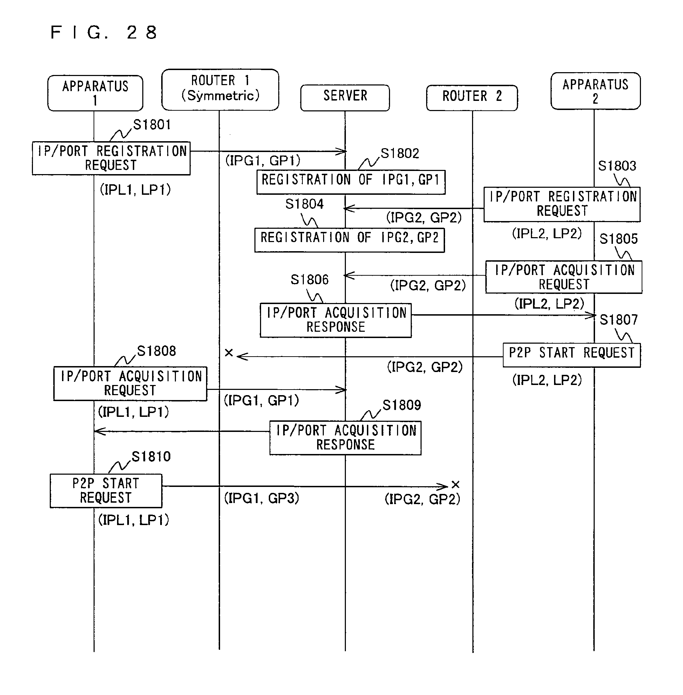

FIG. 28 is a sequence diagram showing a process procedure when a P2P communication channel establishing method employing STUN is applied to two communication apparatuses connected via a router having the Symmetric NAT characteristic. More specifically, in the example of FIG. 28, an apparatus 1 connected to a private network is connected to an external network via a router 1 that executes Symmetric NAT.

Initially, in steps S1801 to S1804, the apparatus 1 and an apparatus 2 each register an IP address and a port number into a server by transmitting an IP/port registration request packet to the server, as in steps S1701 to S1704 of FIG. 27.

Next, the apparatus 2 transmits an IP/port acquisition request packet to the server so as to acquire an IP address and a port number that are used to perform P2P communication with the apparatus 1 (step S1805). In response to the IP/port acquisition request from the apparatus 2, the server returns to the apparatus 2 an IP/port acquisition response packet including an IP address and a port number (IPG1, GP1) assigned to a source IP address and a source port number (IPL1, LP1) by the router 1 (step S1806).

The apparatus 2 references the packet received from the server to acquire the IP address and the port number (IPG1, GP1) of the apparatus 1. Therefore, the apparatus 2 transmits a packet whose destination is (IPG1, GP1), as a P2P start request (step S1807).

Here, when the router 1 has the Symmetric NAT characteristic, the router 1 abandons the P2P start request packet without transferring it to the apparatus 1 (IPL1, LP1). Also, as described above, the router 2 that executes Cone NAT sets NAT so that, by transferring to the router 1 a packet whose source is set to be (IPL2, LP2) and whose destination is set to be (IPG1, GP1), the router 2 can receive a response packet from the router 1.

Next, the apparatus 1 transmits an IP/port acquisition request to the server so as to acquire information required to access the apparatus 2 (step S1808). In response to the IP/port acquisition request from the apparatus 1, the server returns to the apparatus 2 a packet including the IP address and the port number (IPG2, GP2) assigned to the source IP address and the source port number (IPL2, LP2) of the apparatus 2 by the router 2, as an IP/port acquisition response (step S1809).

The apparatus 1 references the IP/port acquisition response received from the server to acquire the IP address and the port number (IPG2, GP2) of the router 2 assigned to the IP address and port number (IPL2, PL2) of the apparatus 2.

Next, the apparatus 1 transmits a packet whose source is (IPL1, LP1), as a P2P start request, to the apparatus 2 (step S1810). However, since the router 1 has the Symmetric NAT characteristic, different port numbers are assigned to respective packet destinations. Therefore, the router 1 assigns a port number [GP3] that is different from [GP1] to the P2P start request packet received from the apparatus 1, and transfers the packet to the router 2.

Here, when the router 2 has the Full Cone NAT characteristic or the R NAT characteristic, the router 2 transfers the received P2P start request packet to the apparatus 2 (IPL2, LP2), so that a P2P communication channel is established between the apparatuses 1 and 2.

However, when the router 2 has the PR NAT or Symmetric NAT characteristic, the router 2 abandons the received P2P start request packet without transferring it to the apparatus 2. Therefore, a P2P communication channel fails to be established between the apparatuses 1 and 2.

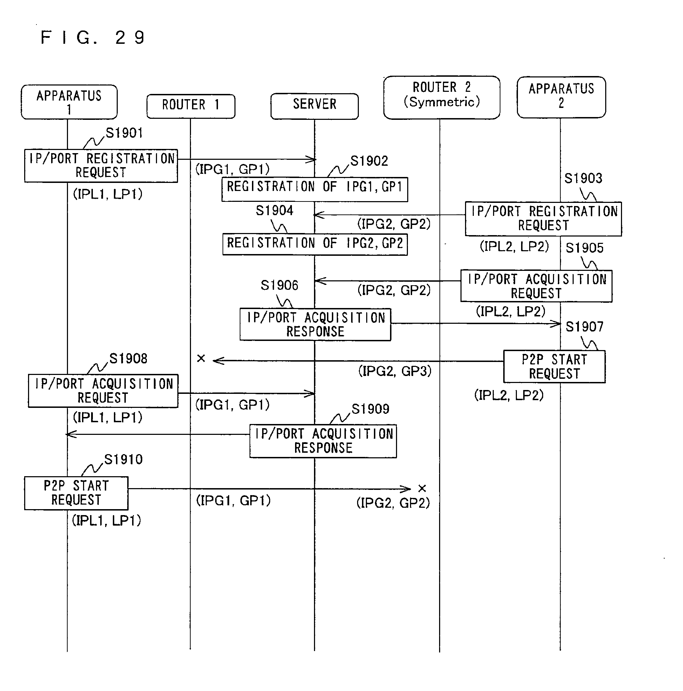

FIG. 29 is a sequence diagram showing a process procedure when the P2P communication channel establishing method employing STUN is applied to two communication apparatuses that are connected via a router having the Symmetric NAT characteristic. More specifically, in the example of FIG. 29, an apparatus 2 connected to a private network is connected to an external network via a router 2 that executes Symmetric NAT.

Initially, in steps S1901 to S1904, an apparatus 1 and the apparatus 2 each transmit an IP/port registration request packet to a server to register an IP address and a port number in the server, as in steps S1701 to S1704 of FIG. 27.

Next, the apparatus 2 transmits an IP/port acquisition request packet to the server so as to acquire an IP address and a port number for performing P2P communication with the apparatus 1 (step S1905). In response to the IP/port acquisition request from the apparatus 2, the server returns to the apparatus 2 an IP/port acquisition response packet including an IP address and a port number (IPG1, GP1) assigned to a source IP address and a source port number (IPL1, LP1) by the router 1 (step S1906).

The apparatus 2 references the packet received from the server to acquire the IP address and the port number (IPG1, GP1) for accessing the apparatus 1. Therefore, the apparatus 2 transmits a packet whose destination is (IPG1, GP1), as a P2P start request (step S1907).

Here, the destination of the P2P start request packet transmitted from the apparatus 2 in step S1907 is different from the destination of the IP/port registration request packet transmitted from the apparatus 2 in step S1903. Therefore, the router 2 that executes Symmetric NAT assigns a port number [GP3] different from a port number [GP2] to the P2P start request packet. Specifically, the router 2 sets NAT so that the router 2 transfers a packet transmitted by the apparatus 1 whose destination is (IPG2, GP3) to the apparatus 2 (IPL2, LP2).

Therefore, even when the apparatus 1 transmits a P2P start request packet whose destination is (IPG2, GP2) after acquiring from the server the IP address and the port number (IPG2, GP2) for accessing the apparatus 2 (steps S1908 and S1909), the router 2 abandons the P2P start request packet. Therefore, a P2P communication channel fails to be established between the apparatuses 1 and 2.

As described above, when at least one of the routers 1 and 2 executes Symmetric NAT, it is difficult to say that the possibility that the P2P communication channel establishingmethod defined in STUN is successful is high.

In view of the aforementioned problem with STUN, a method for establishing a P2P communication channel with respect to a combination of any two NATs of all NATs including Symmetric NAT is conventionally known (see, for example, Japanese Laid-Open Patent Publication No. 2004-180003).

In a P2P communication channel establishing method described in Japanese Laid-Open Patent Publication No. 2004-180003, a communication apparatus predicts a plurality of port numbers of a router that are used when another communication apparatus that is to become a connection destination of P2P communication transmits a P2P start request packet, and transmits a plurality of packets whose destination ports have the predicted port numbers. The router to which the communication apparatus is connected sets a plurality of port numbers that can receive packets transmitted from the connection destination communication apparatus, so that the possibility that a P2P communication channel is successfully established can be improved. Hereinafter, a greater detail will be described.

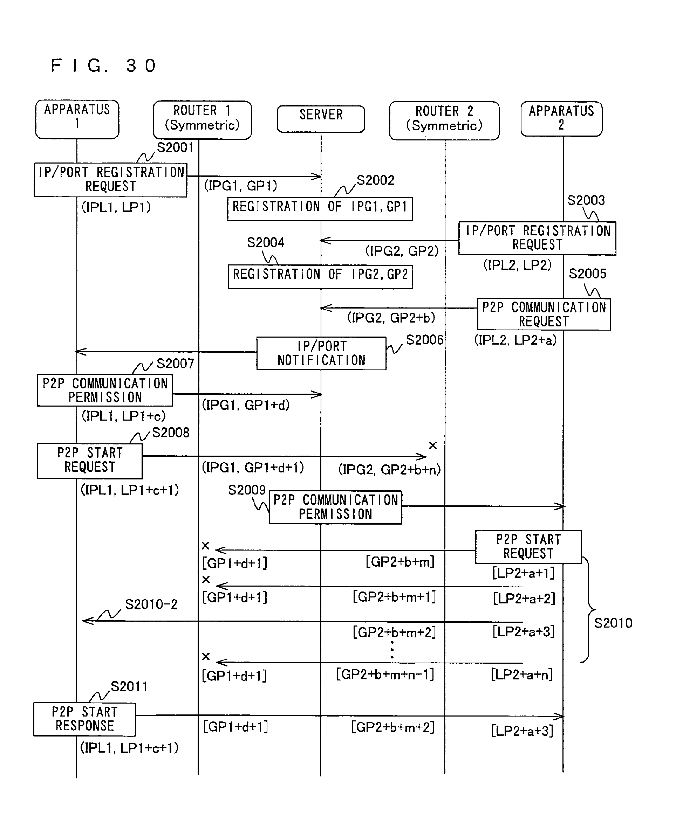

FIG. 30 is a sequence diagram showing the conventional P2P communication channel establishing method described in the aforementioned patent document. In the example of FIG. 30, routers 1 and 2 both have the Symmetric NAT characteristic.

Initially, in steps S2001 to S2004, the apparatuses 1 and 2 each transmit an IP/port registration request packet to a server to register an IP address and a port number into the server, as in steps S1701 to S1704 of FIG. 27.

Next, the apparatus 2 transmits a P2P communication request packet to a server so as to perform P2P communication with the apparatus 1 (step S2005). In this case, the apparatus 2 changes the source port number from a port number [LP2] that is used for transmission of an IP/port registration request packet in step S2003, toaportnumber [LP2+a] (note that a is an arbitrary integer). The reason why the apparatus 2 uses a new port number [LP2+a] as a source port is that it is predicted that the change in source port number is accompanied by the router 2 assigning a new port number [GP2+b] to a source (IPL2, LP2+a) (note that b is an arbitrary integer that is an increment that is defined in the router 2).

The server, when receiving the P2P communication request packet, references the received packet to transmit a packet including the IP address and the port number (IPG2, GP2+b) assigned to the source (IPL2, LP2+a) by the router 2, as an IP/port notification, to the apparatus 1 (step S2006).

The apparatus 1, when receiving the IP/port notification packet transmitted from the server, determines whether or not to permit the apparatus 2 to perform P2P communication, and notifies the server of the determination result (step S2007). In this case, the apparatus 1 changes the source port number from [LP1] that is used in step S2001 for transmission of the IP/port registration request packet, to [LP1+c] (note that c is an arbitrary integer). The reason why the apparatus 1 uses the new port number [LP1+c] as a source port is that it is predicted that the router 1 assigns a new port number [GP1+d] to a source (IPL, LP1+c) (note that d is an arbitrary integer that is an increment defined in the router 1).

Next, the apparatus 1 transmits to the server a P2P start request packet whose destination is set to be (IPG2, GP2+b+n) based on the IP address and the port number (IPG2, GP2+b) acquired from the received IP/port notification packet (step S2008). Note that n is an arbitrary integer.

The apparatus 1 successively transmits packets during a considerably short period in steps S2007 and S2008. Therefore, when the source port number [LP1+c] of the packet transmitted in step S2007 is translated into [GP1+d], a source port number [LP1+c+1] of the packet transmitted in step S2008 is translated into [GP1+d+1] in accordance with the setting of NAT in the router 1.

Moreover, as a result of transmission of a packet by the apparatus 1 in step S2008, the router 1 changes the setting so that the router 1 can receive a response packet. Specifically, after the router 1 translates the source (IPL1, LP1+c+1) of the packet transmitted by the apparatus 1 into (IPG1, GP1+d+1) and transfers the packet to the router 2 (IPG2, GP2+b+n), the router 1 can transfer a packet whose source is (IPG2, GP2+b+n) to the apparatus 1 (IPL1, LP1+c+1). Note that the reason why the apparatus 1 transmits a packet to a port number that is obtained by incrementing the acquired destination port number by an arbitrary integer value n, will be described below.

On the other hand, the server, when receiving a P2P communication permission packet transmitted from the apparatus 1 in step S2007, transmits to the apparatus 2 a communication permission packet including the IP address and the port number (IPG1, GP1+d) of the router 1 (step S2009).

Next, the apparatus 2, immediately after receiving the IP address and the port number (IPG1, GP1+d) for accessing the apparatus 1, transmits a P2P start request packet to the apparatus 1 (step S2010). In step S2010, the apparatus 2 sends out n P2P start request packets whose source port numbers are successively incremented by one from [LP2+a+1] and whose destination ports are the port number [GP1+d+1] of the router 1. The router 2 translates the source port numbers of the n P2P start request packets transmitted from the apparatus 2 into [GP2+b+m] to [GP2+m+n-1], respectively. Here, n is a value that is determined in view of the possibility that the setting of NAT is changed due to a packet transmitted from another apparatus (not shown) connected to the router 1, for a some elapsed time during execution of steps S2008 to S2010. Also, m is an integer smaller than or equal to n.

As a result, the destination port number [GP2+b+n] of the packet transmitted from the apparatus 1 in step S2008 matches one of [GP2+b+m] to [GP2+b+m+n-1]. Therefore, the router 1 transfers one of the received n P2P start request packets to the apparatus 1 (step S2010-2). FIG. 30 shows an example when the port numbers [GP2+b+n] and [GP2+b+m+2] match.

The apparatus 1, when receiving a P2P start request packet transferred from the router 1, returns a P2P start response packet (step S2011). When the router 2 for which the setting of NAT has been adjusted in step S2010-2 transfers the P2P start response packet transmitted from the apparatus 1 to the apparatus 2, a P2P communication channel is established between the apparatuses 1 and 2.

As described above, as a method for establishing a P2P communication channel between two communication apparatuses connected to different private networks, the method employing STUN and the method disclosed in the aforementioned Patent Document are known.
Patent Document 1: Japanese Laid-Open Patent Publication No. 2004-180003

### DISCLOSURE OF THE INVENTION

### PROBLEMS TO BE SOLVED BY THE INVENTION

However, the aforementioned conventional P2P communication channel establishing methods have respective problems as hereinafter described.

Firstly, the method employing STUN has the following two problems. Firstly, it is difficult to operate and maintain a server (STUN server) required to check the NAT characteristic of a router to which a communication apparatus is connected. As described above, execution of a STUN test requires two servers that have ports that are invariably open. A server whose port is invariably open has a risk of suffering from unauthorized access or attack by a malicious person. As the number of open ports increases or the number of available servers increases, the risk also increases. Therefore, it is difficult to operate and maintain servers in STUN, in which two servers (for AS NAT check) having IP addresses different from each other are prepared and two ports different from each other (for PS NAT check) need to be invariably open in one of the servers. Secondly, in the method employing STUN, when any one of the two communication apparatuses is connected to a router having a NAT characteristic other than Cone NAT, a P2P communication channel cannot be established.

On the other hand, in the method disclosed in the aforementioned patent document, the possibility that a P2P communication channel is successfully established is certainly improved without depending on the NAT characteristic (i.e., Cone NAT or Symmetric NAT) of a router to which a communication apparatus is connected. More specifically, when the apparatus 2 next sends out a packet, the apparatus 1 predicts a port number that may be assigned in the router 1, based on a WAN's side port number of the router 2 notified of from a server. The apparatus 2 sends out a plurality of packets so as to increase the possibility that a port number assigned by the router 2 matches a port number predicted by the apparatus 1.

However, when two communication apparatuses are both connected to a router having the Full Cone NAT characteristic, a port number can be easily predicted. Therefore, it is not necessary that one of the communication apparatus sends out a plurality of packets. Conversely, if one of the communication apparatuses sends out a plurality of packets, the following problem arises. Firstly, by sending out a plurality of useless packets, a time required to establish a communication channel is increased. Secondly, if a router connected to a communication apparatus has a function of detecting an intrusion, then when the router receives a plurality of packets whose destinations are a port number that is not used for communication, there is the possibility that a received packet is erroneously detected as a packet that tries unauthorized access. The router having the intrusion detecting function, when detecting unauthorized access, abandons all received packets, so that a communication apparatus connected to the router is likely to become impossible to perform communication, resulting in a reduction in connectivity.

An object of the present invention is to provide a communication apparatus, a communication method and a communication system capable of checking a NAT characteristic using a single server having a single IP address and a single open port. Another object of the present invention is to provide a communication method, a communication apparatus and a communication system capable of establishing a P2P communication channel by an optimal connection procedure corresponding to a NAT characteristic, based on a checkedNAT characteristic. As a result, a connection time and connectivity with two apparatuses are connected are improved.

### SOLUTION TO THE PROBLEMS

According to a first aspect of the present invention, a communication apparatus which is connected to a server via a first relay apparatus having a NAT (Network Address Translation) function, includes an address information check request transmitting unit for transmitting a plurality of address information check request packets whose source port numbers are set to be local port numbers different from each other of the communication apparatus and whose destination port numbers are set to be the same port number as that of each other, the same port number being a port number of the server, to the server, on a one-by-one basis, a communication preparation request transmitting unit for transmitting a communication preparation packet whose source port number is set to be the same port number as the source port number of any of the plurality of address information check request packets, to a destination different from the server, after the address information check request transmitting unit transmits the first address information check request packet and before the address information check request transmitting unit transmits the final address information check request packet, and an address information receiving unit for receiving the same number of address information check response packets as the number of the address information check request packets, the address information check response packets being returned from the server in response to the address information check request packets, and including relay port numbers translated from the source port numbers of the address information check request packets in the first relay apparatus.

With such a configuration, the communication apparatus can determine a relay port number assigned to a communication preparation request packet transmitted to a destination different from a server, by acquiring a relay port number included in an address information check response packet. Thereby, the communication apparatus can determine the port number translation characteristics of two packets transmitted to different destinations, i.e., port number translation characteristics with which the NAT characteristic of the first relay apparatus can be determined.

Also, the communication apparatus according to the present invention may further includes a relay characteristic determining unit for determining a NAT characteristic of the first relay apparatus based on the relay port numbers included in the respective address information check response packets received by the address information receiving unit.

With such a configuration, the communication apparatus can determine the NAT characteristic of the first relay apparatus based on the port number translation characteristics of two packets transmitted to different destinations.

The address information check request transmitting unit may transmit, one for each, a first address information check request packet whose destination port number is set to be the port number of the server and whose source port number is set to be a first local port number of the communication apparatus, a second address information check request packet whose destination port number is the same as that of the first address information check request packet and whose source port number is set to be a second local port number of the communication apparatus different from the first local port number, and a third address information check request packet whose destination port number is the same as that of the first address information check request packet and whose source port number is set to be a third local port number of the communication apparatus different from the first and second local port numbers. The address information receiving unit may receive a first address information packet returned from the server in response to the first address information check request packet and including a first relayport number of the first relay apparatus, a second address information packet returned from the server in response to the second address information check request packet and including a second relay port number of the first relay apparatus, and a third address information packet returned from the server in response to the third address information check request packet and including a third relay port number of the first relay apparatus. The relay characteristic determining unit may calculate a first difference value from the first and second relay port numbers and a second difference value from the second and third relay port numbers, and based on comparison of the first and second difference values, determines the NAT characteristic of the first relay apparatus.

With such a configuration, by utilizing the regularity of the port assignment interval by the NAT function, the NAT characteristic of the first relay apparatus can be efficiently determined.

Moreover, the server may be connected to a connection-destination communication apparatus via a second relay apparatus having the NAT function. The communication apparatus may further includes a relay information transmitting unit for predicting a first P2P relay port number which the first relay apparatus assigns to peer-to-peer communication with the connection-destination communication apparatus; based on the NAT characteristic of the first relay apparatus determined by the relay characteristic determining unit, and transmitting a first relay information packet including the predicted first P2P relay port number to the server, a relay information receiving unit for receiving from the server a second relay information packet including a second P2P relay port number which the second relay apparatus assigns to peer-to-peer communication with the connection-destination communication apparatus, and a communication control unit for transmitting a start request packet whose destination port number is set to be the second P2P relay port number included in the second relay information packet so as to request for the connection-destination communication apparatus to start peer-to-peer communication.

With such a configuration, the communication apparatus notifies a connection-destination communication apparatus of a port number that is predicted to be opened by the first relay apparatus when performing P2P communication with the connection-destination communication apparatus, and transmits a start request packet to prepare a port number for P2P communication in the first relay apparatus. Therefore, the communication apparatus can start P2P communication, which is triggered by reception of a P2P start request packet from the connection-destination communication apparatus.

In this case, the relay information transmitting unit, when the relay characteristic determining unit determines that the first and second difference values are equal to each other, may transmit the first relay information packet including one of the first to third relay port numbers as the first P2P relay port number, and when the relay characteristic determining unit determines that the first and second difference values are not equal to each other, may transmit the first relay information packet including as the first P2P relay port number a value obtained by summing the third relay port number and the smaller of the first and second difference values.

With such a configuration, the communication apparatus, when the first and second difference values are equal to each other, notifies a connection-destination communication apparatus of a port number that is determined, taking it into consideration that the first relay apparatus has the Cone NAT characteristic, and when the first and second difference values are not equal to each other, notifies a connection-destination communication apparatus of a port number that is determined, taking it into consideration that the first relay apparatus has the Symmetric NAT characteristic. Therefore, the possibility that a packet transmitted from the connection-destination communication apparatus can be transferred over the first relay apparatus can be increased.

Alternatively, the relay information transmitting unit, when the relay characteristic determining unit determines that the first relay port number matches the first local port number, may transmit the first relay information packet including any local port number as the first P2P relay port number.

With such a configuration, the communication apparatus notifies a connection-destination communication apparatus of a port number that is determined, taking it into consideration that the first relay apparatus has the Port Reuse characteristic. Therefore, the possibility that a packet transmitted from the connection-destination communication apparatus can be transferred over the first relay apparatus can be increased.

Moreover, the communication preparation request transmitting unit preferably adjusts a TTL (Time To Live) value included in a header of the communication preparation packet so that the communication preparation packet reaches the first relay apparatus and does not reach the second relay apparatus.

With such a configuration, the communication preparation packet does not reach the second relay apparatus connected to the other end of communication. Therefore, it is possible to avoid a situation that, when the second relay apparatus has the intrusion detecting function, the communication preparation packet is erroneously detected as unauthorized intrusion.

The communication apparatus may further include a storage unit for holding the first and second difference values. In this case, before start of peer-to-peer communication at the second time and thereafter, the relay characteristic determining unit may determine the NAT characteristic of the first relay apparatus based on the first and second difference values held in the storage unit.

With such a configuration, the communication apparatus can reuse the first and second difference values held in the storage unit. Therefore, when the communication apparatus performs P2P communication at the second time or thereafter, retransmission of an address check request packet can be removed, so that a time required to establish a P2P communication channel can be reduced.

The address information check request transmitting unit may transmit a fourth address information check request packet whose destination port number is set to be the port number of the server and whose source port number is set to be a fourth local port number of the communication apparatus. The address information receiving unit may receive a fourth address information packet returned from the server in response to the fourth address information check request packet and including a fourth relay port number of the first relay apparatus. The relay information transmitting unit, when the relay characteristic determining unit determines the first and second difference values held in the storage unit are equal to each other, may transmit the first relay information packet including the fourth relay port number as the first P2P relay port number, and when the relay characteristic determining unit determines that the first and second difference values held in the storage unit are not equal to each other, may transmit the first relay information packet including as the first P2P relay port number a value obtained by summing the fourth relay port number and the smaller of the held first and second difference values.

With such a configuration, it is possible to efficiently obtain a port number that is predicted to be used for P2P communication by the first relay apparatus, based on the information held in the storage unit and the fourth relay port number.

The communication apparatus, when determining that the first relay port number and the first local port number match each other, may store, into the storage unit, information indicating that the first relay port number and the first local port number match each other. Before start of peer-to-peer communication at the second time and thereafter, when the relay characteristic determining unit determines that the storage unit holds the information indicating that the first relay port number and the first local port number match each other, the relay information transmitting unit may transmit the first relay information packet including any local port number as the first P2P relay port number.

With such a configuration, when the previous NAT characteristic check determines that the NAT characteristic of a router is Port Reuse, a NAT characteristic check can be removed during the current establishment of a P2P communication channel, and any local port number that is to be opened for P2P communication by itself can be notified of, as a port number that is predicted to be used for P2P communication by the first relay apparatus, to a connection-destination communication apparatus.

The communication apparatus may further include a storage unit for previously holding information about correspondence between an interval between the relay port numbers included in the respective address information check response packets and a NAT characteristic varying depending on the interval. The address information check request transmitting unit may transmit, one for each, a first address information check request packet whose destination port number is set to be the port number of the server and whose source port number is set to be a first local port number of the communication apparatus, and a second address information check request packet whose destination port number is the same as that of the first address information check request packet and whose source port number is set to be a second local port number of the communication apparatus different from the first local port number. The address information receiving unit may receive a first address information packet returned from the server in response to the first address information check request packet and including a first relay port number of the first relay apparatus, and a second address information packet returned from the server in response to the second address information check request packet and including a second relay port number of the first relay apparatus. The relay characteristic determining unit may determine a NAT characteristic corresponding to an interval between the received first and second relay port numbers, in the correspondence information, as the NAT characteristic of the first relay apparatus.

With such a configuration, by utilizing the regularity of the port assignment interval by the NAT function, the NAT characteristic of the first relay apparatus can be efficiently determined.

According to a second aspect of the present invention, a communication method for allowing a communication apparatus which is connected to a server via a first relay apparatus having a NAT (Network Address Translation) function, to communicate with the server to determine a NAT characteristic of the first relay apparatus, includes an address information check request transmitting step of transmitting a plurality of address information check request packets whose source port numbers are set to be local port numbers different from each other of the communication apparatus and whose destination port numbers are set to be the same port number as that of each other, the same port number being a port number of the server, to the server, on a one-by-one basis, a communication preparation request transmitting step of transmitting a communication preparation packet whose source port number is set to be the same port number as the source port number of any of the plurality of address information check request packets, to a destination different from the server, after the first address information check request packet is transmitted and before the final address information check request packet is transmitted in the address information check request transmitting step, an address information receiving step of receiving the same number of address information check response packets as the number of the address information check request packets, the address information check response packets being returned from the server in response to the address information check request packets, and including relay port numbers translated from the source port numbers of the address information check request packets in the first relay apparatus, and a relay characteristic determining step of determining the NAT characteristic of the first relay apparatus based on the relay port numbers included in the respective address information check response packets received in the address information receiving step.

With such a configuration, the communication apparatus can determine a relay port number assigned to a communication preparation request packet transmitted to a destination different from a server, by acquiring a relay port number included in an address information check response packet. Thereby, the communication apparatus can determine the port number translation characteristics of two packets transmitted to different destinations, thereby determining the NAT characteristic of the first relay apparatus based on the port number translation characteristic.

According to a third aspect of the present invention, a communication system includes a server, a first relay apparatus having a NAT (NetworkAddress Translation) function, a second relay apparatus having the NAT function, a first communication apparatus connected via the first relay apparatus to the server, and a second communication apparatus connected via the second relay apparatus to the server. Each of the first and second communication apparatuses includes an address information check request transmitting unit for transmitting a plurality of address information check request packets whose source port numbers are set to be local port numbers different from each other of the each of the communication apparatuses and whose destination port numbers are set to be the same port number as that of each other, the same port number being a port number of the server, to the server, on a one-by-one basis, a communication preparation request transmitting unit for transmitting a communication preparation packet whose source port number is set to be the same port number as the source port number of any of the plurality of address information check request packets, to a destination different from the server, after the address information check request transmitting unit transmits the first address information check request packet and before the address information check request transmitting unit transmits the final address information check request packet, an address information receiving unit for receiving the same number of address information check response packets as the number of the address information check request packets, the address information check response packets being returned from the server in response to the address information check request packets, and including relay port numbers translated from the source port numbers of the address information check request packets in the relay apparatus connected to the each of the communication apparatuses, and a relay characteristic determining unit for determining a NAT characteristic of the first relay apparatus based on the relay port numbers included in the respective address information check response packets received by the address information receiving unit. The server includes an address information checking unit for extracting the relay port numbers included in the address information check request packets transmitted from the first and second respective communication apparatuses, and an address information transmitting unit for transmitting address information check request response packets including the extracted relay port numbers.

With such a configuration, the communication apparatus can determine a relay port number assigned to a communication preparation request packet transmitted to a destination different from a server, by acquiring a relay port number included in an address information check response packet. Thereby, the communication apparatus can determine the port number translation characteristics of two packets transmitted to different destinations, thereby determining the NAT characteristic of the first relay apparatus based on the port number translation characteristic.

According to a fourth aspect of the present invention, a communication system includes a server, a first relay apparatus having a NAT (NetworkAddress Translation) function, a second relay apparatus having the NAT function, a first communication apparatus connected via the first relay apparatus to the server, and a second communication apparatus connected via the second relay apparatus to the server. Each of the first and second communication apparatuses includes an address information check request transmitting unit for transmitting a plurality of address information check request packets whose source port numbers are set to be local port numbers different from each other of the each of the communication apparatuses and whose destination port numbers are set to be the same port number as that of each other, the same port number being a port number of the server, to the server, on a one-by-one basis, and a communication preparation request transmitting unit for transmitting a communication preparation packet whose source port number is set to be the same port number as the source port number of any of the plurality of address information check request packets, to a destination different from the server, after the address information check request transmitting unit transmits the first address information check request packet and before the address information check request transmitting unit transmits the final address information check request packet. The server includes an address information checking unit for determining NAT characteristics of the first and second respective relay apparatuses based on relay port numbers translated from the source port numbers of the address information check request packets in the first and second respective relay apparatuses.

With such a configuration, the server can determine the NAT characteristics of the first and second relay apparatuses based on relay port numbers translated from the source port numbers of address information check request packets in the first and second relay apparatuses.

### EFFECT OF THE INVENTION

According to the communication apparatus, the communication method and the communication system of the present invention, the NAT characteristic of a relay apparatus can be checked by communicating a single server that has a single IP address and a single open port. Thereby, the hardware resources required for checking of the NAT characteristic can be reduced, thereby making it possible to facilitate operation and maintenance of a server, so that required cost can be minimized.

Moreover, when communication apparatuses provided in different private networks establish a P2P communication channel, it is possible to reduce the connection time and avoid the impossibility of communication.

### BRIEF DESCRIPTION OF THE DRAWINGS

[FIG. 1] FIG. 1 is a block diagram showing a whole configuration of a communication system according to Embodiment 1 of the present invention.
[FIG. 2A] FIG. 2A is a block diagram showing a schematic configuration of an apparatus 10 of FIG. 1.
[FIG. 2B] FIG. 2B is a block diagram showing a schematic configuration of an apparatus 20 of FIG. 1.
[FIG. 2C] FIG. 2C is a block diagram showing a schematic configuration of a server 001 of FIG. 1.
[FIG. 3] FIG. 3 is a sequence diagram showing an outline of a process that is executed by the communication system of this embodiment so as to establish a P2P communication channel.
[FIG. 4A] FIG. 4A is a sequence diagram showing details of processes during a NAT characteristic check phase and a preparation phase of FIG. 3.
[FIG. 4B] FIG. 4B is a flowchart showing a detail of a process of step S408 of FIG. 4A.
[FIG. 5A] FIG. 5A is a diagram for describing step S410 of FIG. 4A.
[FIG. 5B] FIG. 5B is a diagram for describing step S411 of FIG. 4A.
[FIG. 6] FIG. 6 is a sequence diagram showing a detail of a process during an information exchange phase of FIG. 3.
[FIG. 7] FIG. 7 is a sequence diagram showing a detail of a process during a P2P communication channel establishment phase of FIG. 3.
[FIG. 8] FIG. 8 is a diagram showing a detail of a connection sequence when a router 101 has Cone NAT.
[FIG. 9A] FIG. 9A is a diagram showing a detail of a connection sequence when the router 101 has Symmetric NAT.
[FIG. 9B] FIG. 9B is a diagram showing port numbers of FIG. 9A.
[FIG. 10] FIG. 10 is a diagram showing a detail of a connection sequence when the router 101 has Port Reuse.
[FIG. 11] FIG. 11 is a connection sequence diagram according to Embodiment 2 of the present invention.
[FIG. 12] FIG. 12 is a block diagram showing a whole configuration of a communication system according to Embodiment 3 of the present invention.
[FIG. 13] FIG. 13 is a diagram showing a correspondence relationship between packets transmitted and received for establishment of a P2P communication channel and SIP messages.
[FIG. 14] FIG. 14 is a diagram showing an exemplary message format of an OPTIONS request of SIP.
[FIG. 15] FIG. 15 is a diagram showing an exemplary format of a 200 OK response of SIP.
[FIG. 16] FIG. 16 is a diagram showing an exemplary format of an INVITE request of SIP.
[FIG. 17] FIG. 17 is a diagram showing an exemplary format of a 183 Session Progress response of SIP.
[FIG. 18] FIG. 18 is a sequence diagram showing details of processes during the NAT characteristic check phase and the preparation phase using the SIP protocol.
[FIG. 19] FIG. 19 is a sequence diagram showing a control process for allowing a communication system according to a third embodiment of the present invention to establish a P2P communication channel.
[FIG. 20A] FIG. 20A is a table showing a combination of P2P ports notified by two routers for each combination of NAT characteristics of the routers during the information exchange phase.
[FIG. 20B] FIG. 20B is a table showing a combination of processes executed by apparatuses connected to two routers for each combination of NAT characteristics of the routers during the P2P communication channel establishment phase.
[FIG. 21A] FIG. 21A is a diagram showing an example in which an apparatus is connected via three routers to a global network.
[FIG. 21B] FIG. 21B is a diagram showing another example in which an apparatus is connected via three routers to a global network.
[FIG. 22A] FIG. 22A is a diagram showing a router that has a port assignment interval of 1 and has the Cone NAT characteristic.
[FIG. 22B] FIG. 22B is a diagram showing a router that has a port assignment interval of 1 and has the Symmetric NAT characteristic.
[FIG. 23A] FIG. 23A is a diagram for describing NAT called Full Cone NAT.
[FIG. 23B] FIG. 23B is a diagram for describing NAT called Restricted Cone NAT.
[FIG. 23C] FIG. 23C is a diagram for describing a NAT characteristic called Port Restricted Cone NAT.
[FIG. 23D] FIG. 23D is a diagram for describing NAT called Adress Sensitive Symmetric NAT.
[FIG. 23E] FIG. 23E is a diagram for describing NAT called Port Sensitive Symmetric NAT.
[FIG. 24A] FIG. 24A is a diagram for describing an outline of a Port Reuse characteristic.
[FIG. 24B] FIG. 24B is a diagram for describing a function of a router having the Port Reuse characteristic.
[FIG. 25A] FIG. 25A is a diagram schematically showing STUN-TestI.
[FIG. 25B] FIG. 25B is a diagram schematically showing STUN-TestII.
[FIG. 25C] FIG. 25C is a diagram schematically showing STUN-TestIII.
[FIG. 26] FIG. 26 is a flowchart for checking a NAT characteristic using STUN.
[FIG. 27] FIG. 27 is a sequence diagram showing a P2P communication channel establishing method using STUN.
[FIG. 28] FIG. 28 is a sequence diagram showing a process procedure when a P2P communication channel establishing method employing STUN is applied to two communication apparatuses connected via a router having the Symmetric NAT characteristic.
[FIG. 29] FIG. 29 is a sequence diagram showing a process procedure when the P2P communication channel establishing method employing STUN is applied to two communication apparatuses that are connected via a router having the Symmetric NAT characteristic.
[FIG. 30] FIG. 30 is a sequence diagram showing a conventional P2P communication channel establishing method.

### DESCRIPTION OF THE REFERENCE CHARACTERS

00 global network
01, 02 private network
001 server
10, 20 apparatus
101, 201 router
300 SIP server
0011 address information checking unit
0012 address information transmitting unit
0013 relay information transferring unit
1001, 2001 address information check request transmitting unit
1002, 2002 address information receiving unit
1003, 2003 direct communication preparation request transmitting unit
1004, 2004 relay characteristic determining unit
1005, 2005 relay information transmitting unit
1006, 2006 relay information receiving unit
1007, 2007 communication control unit
1008, 2008 communication unit

### BEST MODE FOR CARRYING OUT THE INVENTION

### (Embodiment 1)

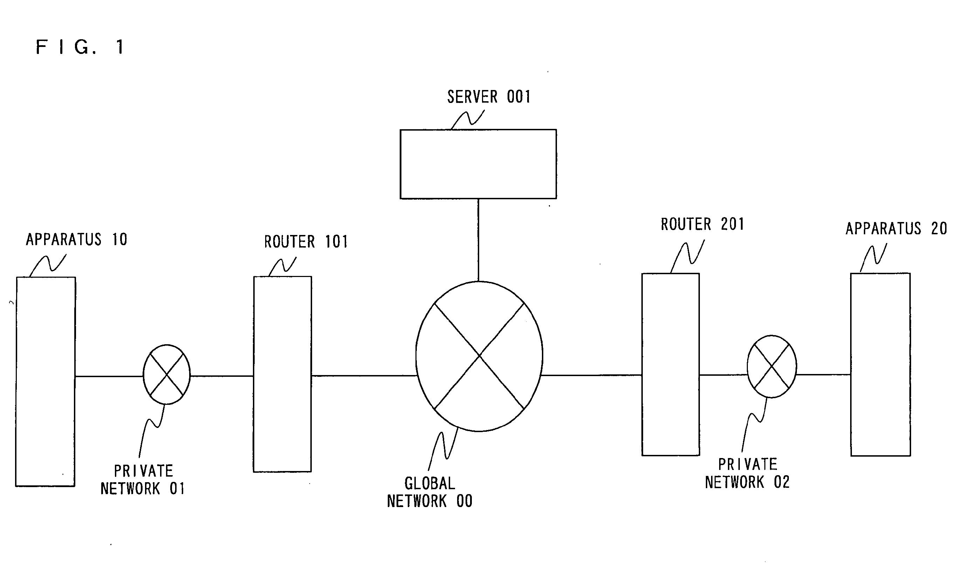

FIG. 1 is a block diagram showing a whole configuration of a communication system according to Embodiment 1 of the present invention.

As shown in FIG. 1, a private network 01 is connected to a global network 00 via a router 101 having a global IP address [IPG1]. A private network 02 is connected to the global network 00 via a router 201 having a global IP address [IPG2]. A server 001 having a global IP address [IPS] is connected to the global network 00. An apparatus 10 having a local IP address [IPL1] and an apparatus 20 having a local IP address [IPL2] are connected to the private networks 01 and 02, respectively.

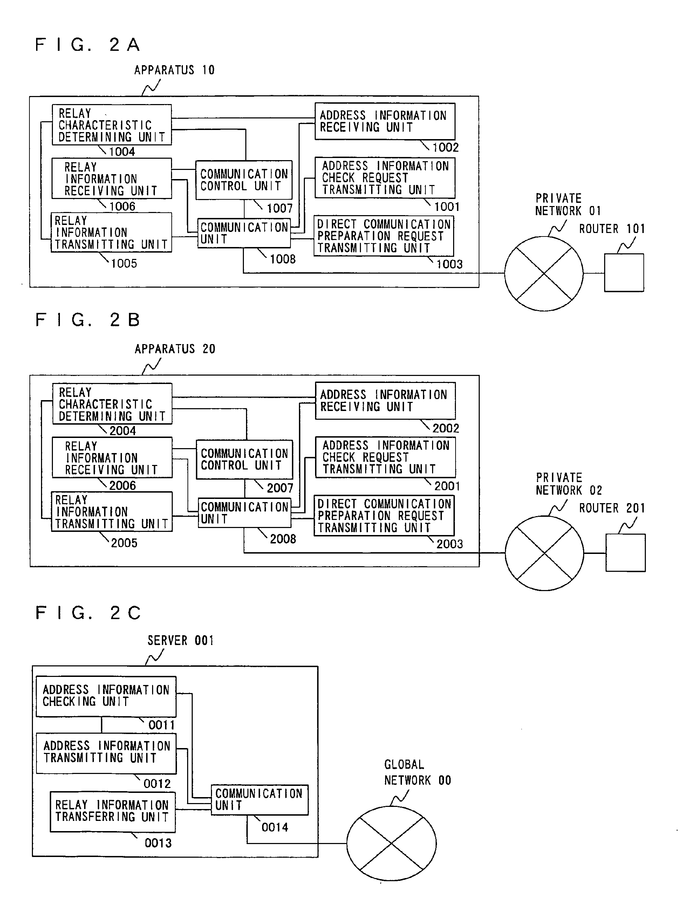

FIG. 2A is a block diagram showing a schematic configuration of the apparatus 10 of FIG. 1.

The apparatus 10 comprises an address information check request transmitting unit 1001, an address information receiving unit 1002, a direct communication preparation request transmitting unit 1003, a relay characteristic determining unit 1004, a relay information transmitting unit 1005, a relay information receiving unit 1006, a communication control unit 1007, and a communication unit 1008.

The address information check request transmitting unit 1001 uses a NAT function of the router 101 (relay apparatus) to transmit an address information check request packet to the server 001 so as to check a port number set in a packet transmitted from the apparatus 10. More specifically, the address information check request transmitting unit 1001 transmits to the server 001 at least three address information check request packets having different source port numbers and the same destination port number.

The address information receiving unit 1002 receives an address information check response packet that is returned by the server 001 in response to an address information check request packet. The address information check response packet includes, in a data portion thereof, a port number (a port number translated from a local port number of the apparatus 10) using the NAT function of the router 101.

The direct communication preparation request transmitting unit 1003 transmits a P2P communication preparation packet to another apparatus connected to the global network 00, during a process in which the address information check request transmitting unit 1001 transmits the three address information check request packets, so as to infer a port number that is to be assigned by the router 101 during P2P communication.

The relay characteristic determining unit 1004 determines the NAT characteristic of the router 101 based on a port number included in the data portion of an address information check response packet received by the address information receiving unit 1002.

The relay information transmitting unit 1005 predicts a port number of the router 101 that is to be used for P2P communication, based on the NAT characteristic of the router 101 determined by the relay characteristic determining unit 1004. The relay information transmitting unit 1005 transmits a NAT information notification packet including the predicted port number in a data portion thereof, so as to notify, via the server, the connection destination apparatus 20 of the port number used for P2P communication.

The relay information receiving unit 1006 receives a NAT information notification packet transmitted from a connection destination apparatus. The received NAT information notification packet includes a port number that is used for P2P communication by the router 201 connected to the connection destination apparatus 20.

The communication control unit 1007 extracts a port number used for P2P communication of the router 201 from the received NAT information notification packet, and generates a P2P start request packet whose destination port number is set to be the port number.

The communication unit 1008 sends out packets generated by the aforementioned units to the private network 01, and receives a packet addressed to the apparatus 10 from the private network 01.

FIG. 2B is a block diagram showing a schematic configuration of the apparatus 20 of FIG. 1.

The apparatus 20 comprises an address information check request transmitting unit 2001, an address information receiving unit 2002, a direct communication preparation request transmitting unit 2003, a relay characteristic determining unit 2004, a relay information transmitting unit 2005, a relay information receiving unit 2006, a communication control unit 2007, and a communication unit 2008. The functions of the address information check request transmitting unit 2001 to the communication unit 2008 are similar to the respective functions of the address information check request transmitting unit 1001 to the communication unit 1008 of FIG. 2A and will not be here described.

FIG. 2C is a block diagram showing a schematic configuration of the server 001 of FIG. 1.

The server 001 comprises an address information checking unit 0011, an address information transmitting unit 0012, a relay information transferring unit 0013, and a communication unit 0014.

The address information checking unit 0011, when receiving an address information check request packet from each of the apparatuses 10 and 20, extracts a source port number included in a header of the received packet. The source port number extracted by the address information checking unit 0011 is a value that is set by the NAT function of the router 101 or 201. The address information checking unit 0011 outputs the extracted port number to the address information transmitting unit 0012.

The address information transmitting unit 0012 generates an address information check response packet including in a data portion thereof the port number received from the address information checking unit 0011, and returns the generated packet to the apparatus.

The relay information transferring unit 0013, when receiving a NAT information notification packet from one of the two apparatus, transfers the received NAT information notification packet to the other apparatus.

The communication unit 0014 sends out a packet generated in each unit to the global network 00, and receives via the global network 00 a packet addressed to the server 001.

Here, a control sequence in the communication system of this embodiment will be described.

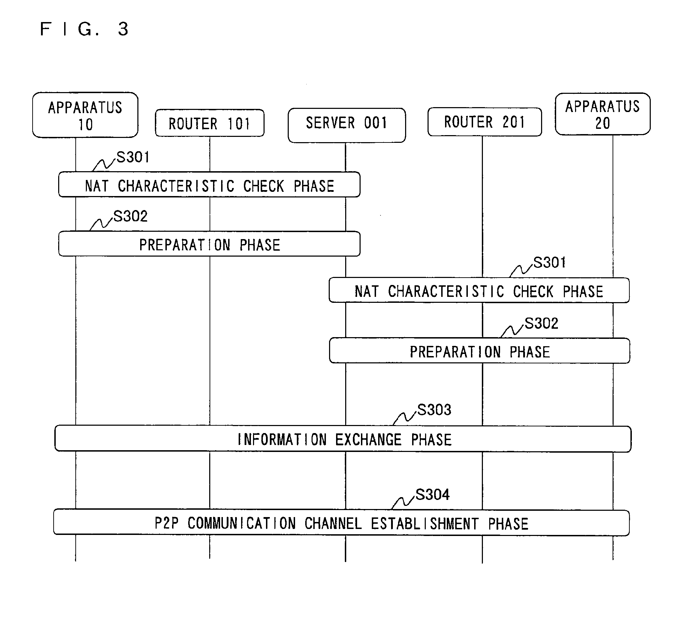

FIG. 3 is a sequence diagram showing an outline of a process that is executed by the communication system of this embodiment so as to establish a P2P communication channel.

As shown in FIG. 3, a P2P communication channel establishing method according to this embodiment includes four phases, i.e., a NAT characteristic check phase S301, a preparation phase S302, an information exchange phase S303, and a P2P communication channel establishment phase S304.

Initially, during the NAT characteristic check phase S301, the apparatus 10 communicates with the server 001 to check the NAT characteristic (e.g., Cone NAT or Symmetric NAT) of the router 101 connected to the apparatus 10. Also, the apparatus 10 checks whether or not the router 101 has the Port Reuse characteristic. Similarly, the apparatus 20 communicates with the server 001 to check the NAT characteristic of the router 201 (relay apparatus) and the presence or absence of the Port Reuse characteristic.

Next, during the preparation phase S302, the apparatus 10 transmits a packet to the router 101 to which the apparatus 10 is connected, to open a port of the router 101 that is to be used for communication with the apparatus 20. Similarly, the apparatus 20 transmits a packet to the router 201 to open a port of the router 201 that is to be used for communication with the apparatus 10.

Next, during the information exchange phase S303, the apparatuses 10 and 20 exchange with each other the NAT characteristics determined during the NAT characteristic check phase and information required to establish a P2P communication channel, via the server 001.

Thereafter, during the P2P communication channel establishment phase S304, the apparatuses 10 and 20 transmit packets to each other based on the information acquired during the information exchange phase S303, to establish a P2P communication channel.

Note that, in FIG. 3, for the sake of convenience of illustration, the NAT characteristic check phase S301 and the preparation phase S302 are illustrated in the specific order. However, any one of the NAT characteristic check phase S301 and the preparation phase S302 may be executed before the other as long as both are completed before the information exchange phase S303.

Hereinafter, the four phases will be described in more detail.

### <NAT Characteristic Check Phase and Preparation Phase>

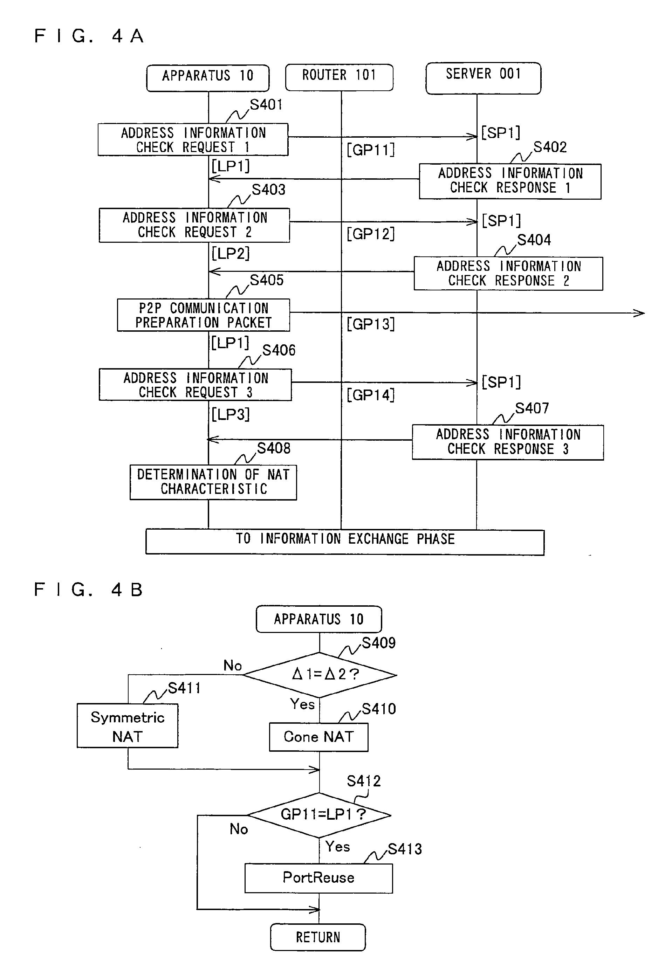

FIG. 4A is a sequence diagram showing details of processes during the NAT characteristic check phase and the preparation phase of FIG. 3.

Initially, the apparatus 10 transmits an address information check request 1 to the server 001 (step S401). More specifically, the address information check request transmitting unit 1001 transmits an address information check request packet 1 whose source port number is set to be a port number [LP1] of the apparatus 10 and whose destination port number is set to be a port number [SP1] of the server 001.

Next, in response to the address information check request 1 transmitted from the apparatus 10, the server 001 returns an address information check response 1 to the apparatus 10 (step S402). More specifically, the communication unit 0014 receives the address information check request packet 1, and transfers the received packet to the address information checking unit 0011. The address information checking unit 0011 references the header of the transferred packet to extract the source port number, i.e., a port number [GP11] set by the router 101, and outputs the extracted source port number [GP11] to the address information transmitting unit 0012. Thereafter, the address information transmitting unit 0012 generates an address information check response packet 1 including, in a data portion thereof, the port number [GP11] of the router 101 received from the address information checking unit, and outputs the generated packet to the communication unit 0014. The communication unit 0014 returns the packet received from the address information transmitting unit 0012 to the apparatus 10. In the apparatus 10, the communication unit 1008, when receiving the address information check response packet 1, transfers the received packet to the address information receiving unit 1002.

Next, the apparatus 10 transmits an address information check request 2 to the server 001 (step S403). More specifically, the address information check request transmitting unit 1001 transmits an address information check request packet 2 whose source port number is set to be a port number [LP2] of the apparatus 10 and whose destination port number is set to be the port number [SP1] of the server 001.

Next, in response to the address information check request 2 transmitted from the apparatus 10, the server 001 returns an address information check response 2 to the apparatus (step S404). More specifically, the communication unit 0014 receives the address information check request packet 2 and transfers the received packet to the address information checking unit 0011. The address information checking unit 0011 references the header of the transferred packet to extract the source port number, i.e., a port number [GP12] set by the router 101, and outputs the extracted source port number [GP12] to the address information transmitting unit 0012. Thereafter, the address information transmitting unit 0012 generates an address information check response packet 2 including, in a data portion thereof, the port number [GP12] of the router 101 received from the address information checking unit, and outputs the generated packet to the communication unit 0014. The communication unit 0014 returns the packet received from the address information transmitting unit 0012 to the apparatus 10. In the apparatus 10, the communication unit 1008, when receiving the address information check response packet 1, transfers the received packet to the address information receiving unit 1002.

Next, the apparatus 10 transmits a P2P communication preparation packet to the apparatus 20 (step S405). More specifically, the apparatus 10 transmits to the router 101 a packet whose source port number is set to be the port number [LP1] of the apparatus 10 and whose destination is an IP address and a port number of the apparatus 20, so as to prepare on the router 101 a port number [GP13] that is used for P2P communication with the apparatus 20 having an IP address different from that of the server.

In step S405, the router 101 sets NAT so that the router 101 receives a packet transmitted from the apparatus 20 via the router 201 to the router 101 (IPG1, GP13). A method with which the router 101 sets NAT varies, depending on the NAT characteristic (FIGS. 23A to 23E), and will not be described.

Next, the apparatus 10 transmits an address information check request 3 to the server 001 (step S406). More specifically, the address information check request transmitting unit 1001 transmits as the address information check request 3 a packet whose source port number is set to be a port number [LP3] of the apparatus 10 and whose destination port number is set to be the port number [SP1] of the server 001.

In response to the address information check request 3 transmitted from the apparatus 10, the server 001 returns an address information check response 3 to the apparatus 10 (step S407). More specifically, the communication unit 0014 receives an address information check request packet 3, and transfers the received packet to the address information checking unit 0011. The address information checking unit 0011 references the header of the transferred packet to extract the source port number, i.e., a port number [GP14] of the router 101, and outputs the extracted source port number [GP14] to the address information transmitting unit 0012. Thereafter, the address information transmitting unit 0012 generates an address information check response packet 3 including, in a data portion thereof, the port number [GP14] of the router 101 received form the address information checking unit, and outputs the generated packet to the communication unit 0014. The communication unit 0014 returns the packet received from the address information transmitting unit 0012 to the apparatus 10. In the apparatus 10, the communication unit 1008, when receiving the address information check response packet 1, transfers the received packet to the address information receiving unit 1002.

Next, the apparatus 10, when receiving the address information check response packets 1 to 3, determines the NAT characteristic of the router 101 (step S408). The relay characteristic determining unit 1004 of the apparatus 10 determines the NAT characteristic of the router 101 based on the three port numbers [GP11], [GP12] and [GP14] of the router 101 included in the address information check response packets 1 to 3 in accordance with a process flow described below.

Although it has been assumed in this embodiment that the P2P communication preparation packet is transmitted after transmission of the address information check request 2, the transmission timing of the packet is not necessarily limited to this. Specifically, the P2P communication preparation packet may be transmitted after transmission of the address information check request 1 and before transmission of the address information check request 3. In other words, the P2P communication preparation packet and the address information check request packet 2 may be transmitted in an arbitrary order.

Although it has also been assumed in the example of FIG. 4A that [LP1] is set in the source port number of the P2P communication preparation packet, the source port number of the P2P communication preparation packet may be the same as any of the port numbers [LP1] to [LP3] for transmission of the address information check request packets 1 to 3.

Moreover, for the destination of the aforementioned P2P communication preparation packet (step S405), the apparatus 10 may previously acquire an IP address and a port number of the apparatus 20. Alternatively, the server 001 sets an IP address and a port number of the apparatus 20 into either of the address information check response packets 1 and 2 and transmits the packet to the apparatus 10, and the apparatus 10 may acquire the IP address and the port number of the apparatus 20 by referencing the received address information check response packet 1 or 2.

Moreover, in step S405, taking into consideration the possibility that the router 201 has a function of detecting unauthorized intrusion, the P2P communication packet may be more preferably modified as follows.

For example, the destination port number of a packet transmitted by the apparatus 10 toward the apparatus 20 is set to be a port number that is actually used by the router 201 (e. g. , a port number assigned to a packet of the apparatus 20 by the router 201 when the apparatus 20 communicates with the server 001). This is because, if the router 201 has the intrusion detecting function, then when the router 201 receives from the apparatus 10 a P2P communication preparation packet including, in a destination port number thereof, a port number that is not used for communication, the packet is likely to be erroneously detected as an unauthorized access packet. Since the router 201, when detecting an unauthorized access packet, abandons all subsequent packets transmitted form the apparatus 10, the apparatus 10 is likely to become impossible to communicate with the apparatus 20.

Alternatively, the apparatus 10 may adjust the TTL (Time To Live) value of a P2P communication preparation packet so that the packet does not reach the router 201. The reason why the apparatus 10 transmits the P2P communication preparation packet is that a port number for P2P communication with the apparatus 20 is prepared in the router 101 to which the apparatus 10 is connected. Therefore, the P2P communication preparation packet does not necessarily need to reach the router 201. Therefore, if the apparatus 10 previously adjusts the TLL value so that the P2P communication preparation packet reaches the router 101 and does not reach the router 201, it is possible to avoid the P2P communication preparation packet from being detected as unauthorized intrusion in the router 201.

FIG. 4B is a flowchart showing a detail of the process of step S408 of FIG. 4A.

As described above, the apparatus 10 references the address information check response packets 1 to 3 returned from the server 001 to acquire the port numbers [GP11], [GP12] and [GP14] that are used by the router 101 during transmission of the address information check request packets 1 to 3. The port number [GP13] that is assigned to a P2P communication preparation packet by the router 101 varies, depending on the NAT characteristic of the router 101, and may or may not match any of the three port numbers [GP11], [GP12] and [GP14]. Also, in general, any two adjacent port numbers that are opened by a router have a constant interval. Therefore, the NAT characteristic can be determined by checking a difference between two adj acent port numbers of the three port numbers [GP11], [GP12] and [GP14].

The relay characteristic determining unit 1004 initially determines whether or not a difference value Δ1 (=|[GP12]-[GP11]|) between the acquired port numbers [GP11] and [GP12] matches a difference value Δ2 (=|[GP14]-[GP12]|) between [GP12] and [GP14] (step S409). When the difference values Δ1 and Δ2 match (Yes in step S409), the relay characteristic determining unit 1004 determines that the NAT of the router 101 is Cone NAT (step S410), and the flow goes to step S412. On the other hand, when the difference values Δ1 and Δ2 do not match (No in step S409), the relay characteristic determining unit 1004 determines the NAT of the router 101 is Symmetric NAT (step S411), and the flow goes to step S412.

Moreover, the relay characteristic determining unit 1004 determines whether or not the port number [GP11] of the router 101 acquired in step S402 matches the source port number [LP1] of the address information check request packet 1 transmitted in step S401 (step S412). When [GP11] matches [LP1] (Yes in step S412), the relay characteristic determining unit 1004 determines that the router 101 has the Port Reuse characteristic (step S413), and ends the NAT characteristic determining process. When otherwise, the relay characteristic determining unit 1004 ends the NAT characteristic determining process.

Note that, in order to strictly determine whether or not the router 101 has the Port Reuse characteristic, the relay characteristic determining unit 1004 may further determine whether or not the port number [GP12] matches [LP2]. In this case, the relay characteristic determining unit 1004, when [GP11] matches [LP1] and [GP12] matches [LP2], determines that the router 101 has the Port Reuse characteristic. Also, in order to determine whether or not the router 101 has the Port Reuse characteristic, the relay characteristic determining unit 1004 may less strictly determine that the router 101 has the Port Reuse characteristic when confirming either that [GP11] matches [LP1] or that [GP12] matches [LP2]. Also, the processes of steps S412 and S413 for determination of the Port Reuse characteristic may be performed before step S409.

Also, when the router 101 has the Port Reuse characteristic and a difference between [LP1] and [LP2] is not equal to a difference between [LP2] and [LP3], the difference values Δ1 and Δ2 are not equal to each other. Therefore, in the flowchart of FIG. 4B, when the router 101 has Cone NAT with Port Reuse, there remains the possibility that the router 101 is determined to have Symmetric NAT. Note that, in the following P2P connection sequence, a common process is prepared for Cone NAT with Port Reuse and for Symmetric NAT with Port Reuse. Therefore, as long as the presence or absence of Port Reuse is determined in steps S412 and S413, a malfunction does not particularly occur.

Moreover, in the sequence of FIG. 4A, the apparatus 10, when receiving the address information check response packet 1 from the server 001 in step S402, may execute steps S412 and S413, and when determining that the router 101 has Port Reuse, may skip steps S403 to S408.

By the NAT characteristic determining process described above, the apparatus 10 can check the NAT characteristic of the router 101.

Next, a specific example of the NAT characteristic determining process will be described.

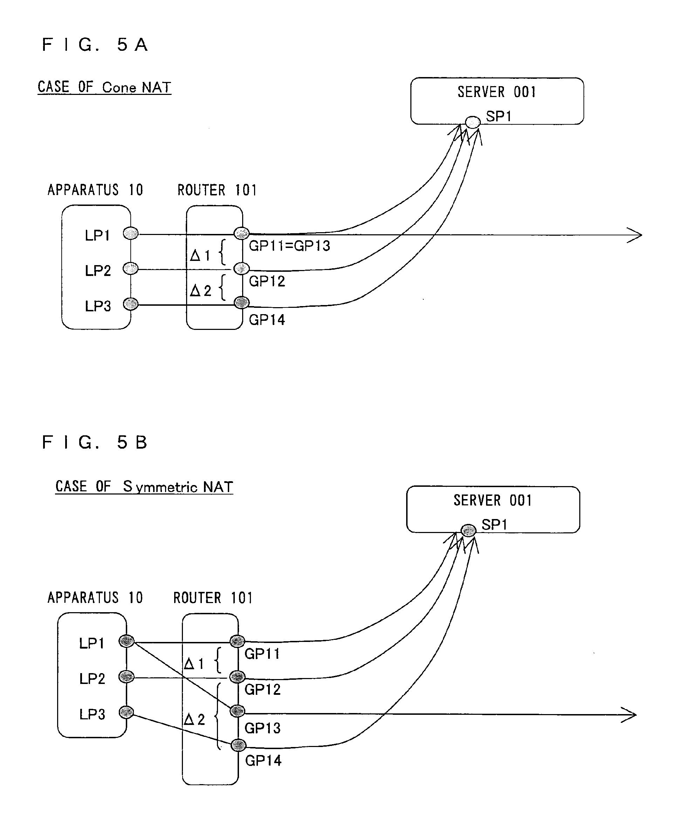

FIG. 5A is a diagram for describing step S410 of FIG. 4A.

When the result of determination by the relay characteristic determining unit 1004 in step S409 is Yes, i.e., the difference values Δ1 and Δ2 match, it means that the router 101 has assigned the same port number to both a packet including an IP address and a port number of the server as its destination and a packet including an IP address and a port number of the apparatus 20 as its destination. Therefore, the relay characteristic determining unit 1004 can determine that the router 101 has the Cone NAT characteristic.

FIG. 5B is a diagram for describing step S411 of FIG. 4A.

When the result of determination by the relay characteristic determining unit 1004 in step S409 is No, i.e., the difference values Δ1 and Δ2 are different from each other, it means that the router 101 has assigned different port numbers to a packet including an IP address and a port number of the server as its destination and a packet including an IP address and a port number of the apparatus 20 as its destination. Therefore, the relay characteristic determining unit 1004 can determine that the router 101 has the Symmetric NAT characteristic.

Note that the apparatus 20 checks the NAT characteristic of the router 201 in accordance with a procedure similar to that of FIG. 4A, and the router 201 opens a port for P2P communication.

Although the NAT characteristic check phase (steps S401 to S404 and steps S406 to S408) and the preparation phase (step S405) are shown together in FIG. 4A for the sake of convenience of description, the NAT characteristic check phase and the preparation phase may be separated from each other.

Moreover, the NAT characteristic check phase and the preparation phase do not necessarily need to be executed in the order shown in this embodiment. Therefore, the steps may be executed in an order different from that of this embodiment as long as the apparatuses 10 and 20 have completed the NAT characteristic check phase and the preparation phase before the subsequent information exchange phase.

### <Information Exchange Phase>

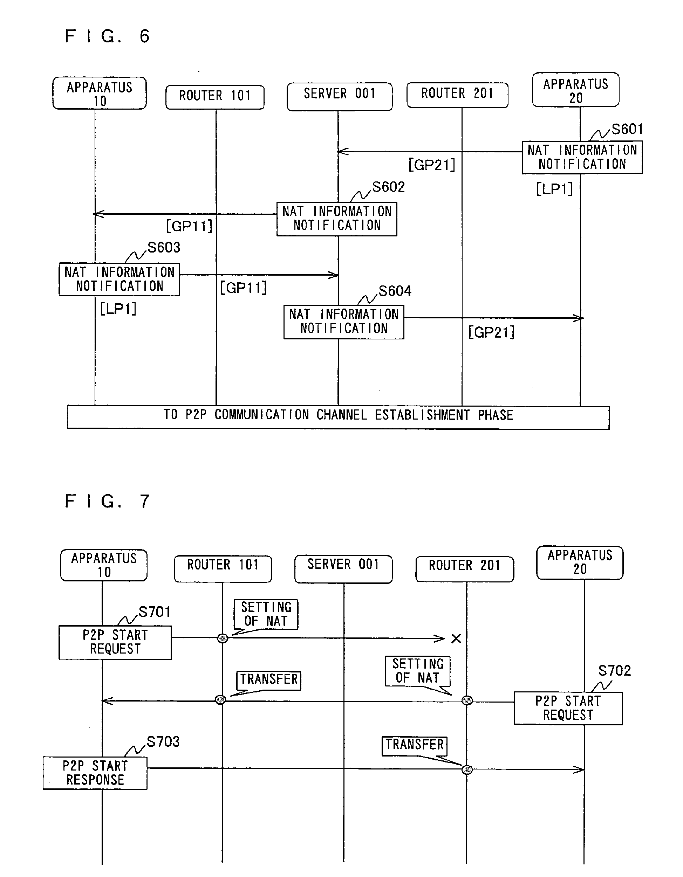

FIG. 6 is a sequence diagram showing a detail of a process during the information exchange phase of FIG. 3.

It is hereinafter assumed that the apparatuses 10 and 20 previously transmit packets to the server 001 via the routers 101 and 201, respectively, to establish a communication channel, so that the apparatuses 10 and 20 are in a state that allows them to exchange information via the server in real time.

Initially, the apparatus 20 transmits to the server 001 a port number (hereinafter referred to as a P2P communication port number) used for P2P communication of the router 201 to which the apparatus 20 is connected, so as to notify the apparatus 10 of the port number (step S601). More specifically, the relay information transmitting unit 2005 determines the NAT characteristic of the router 201 during the NAT characteristic check phase, and based on the result of determination, predicts the P2P communication port number. Thereafter, the relay information transmitting unit 2005 generates a NAT information notification packet including the predicted port number in a data portion thereof, and transmits the generated NAT information notification packet via the communication unit 2008 to the server 001.

The P2P communication port number is determined, depending on the NAT characteristic, as described below.

### (a) Case where the NAT characteristic is Cone

The apparatus 20 determines as the P2P communication port number any one of the port numbers [GP21], [GP22] and [GP24]. In this embodiment, [GP21] is selected as the P2P communication port number.

### (b) Case where the NAT characteristic is Symmetric

In Symmetric NAT, the port number is incremented (or decremented) by a predetermined value every time the port number is assigned to a packet. The predetermined value is hereinafter referred to as a "port assignment interval". As illustrated in FIG. 5B, since the smaller of the difference values Δ1 and Δ2 corresponds to the port assignment interval of the router 201, a port number that the router 201 opens next is predicted to be [GP24+Δ1]. Therefore, the apparatus 20 determines [GP24+Δ1] as the P2P communication port number.

### (c) Case where NAT has the Port Reuse characteristic

The apparatus 20 determines a port number [LP4] that is to be newly opened during the next P2P communication channel establishment phase, as the P2P communication port number. Note that the port number [LP4] may be any port number different from [LP1], [LP2] and [LP3] that are used in the address information check request transmitting process.

The server 001, when receiving the NAT information notification packet, transfers the received NAT information notification packet to the apparatus 10 (step S602). More specifically, in the server 001, therelayinformationtransferring unit 0013 temporarily receives the NAT information notification packet transmitted from the apparatus 20 via the communication unit 0014, and transfers the received NAT information notification packet via the communication unit 0014 to the apparatus 10.

Next, the apparatus 10 notifies the server 001 of NAT information so as to notify the apparatus 20 of the P2P communication port number of the router 101 to which the apparatus 10 is connected (step S603). More specifically, the relay information transmitting unit 1005 predicts the P2P communication port number based on the NAT characteristic of the router 101 acquired during the NAT characteristic check phase, generates a NAT information notification packet including the predicted port number in a data portion thereof, and transmits the generated NAT information notification packet via the communication unit 1008 to the server 001. The NAT information notification transmitted to the server 001 by the apparatus 10 is similar to that which is transmitted to the server 001 by the apparatus 20 and will not be described.

The server 001, when receiving the NAT information notification packet, transfers the received NAT information notification packet to the apparatus 20 (step S604). More specifically, in the server 001, therelayinformationtransferring unit 0014 temporarily receives the NAT information notification packet transmitted from the apparatus 10 via the communication unit 0014, and transfers the received NAT information notification packet via the communication unit 0014 to the apparatus 20.

It has been assumed in this embodiment that the apparatuses 10 and 20 transmit P2P communication port numbers determined based on NAT characteristics, as NAT information, to the apparatus 20 and the apparatus 10, respectively. Alternatively, the server 001 may be notified of three port numbers (the port numbers [GP11], [GP12] and [GP14], or the port number [GP21], [GP22] and [GP24]). In this case, the apparatuses 10 and 20 may determine the NAT characteristics of the routers 201 and 101 to which the apparatus at the other end of communication is connected, from the three port numbers acquired from the server 001, in accordance with the process flowof FIG. 4B, and may calculate the values of the P2P communication port numbers of the routers, respectively.

Alternatively, the server 001 may determine the NAT characteristics of the routers 101 and 201 based on the three port numbers acquired from the apparatuses 10 and 20, respectively, in accordance with the process flow of FIG. 4B, and may notify the apparatuses 20 and 10 of the P2P communication port numbers of the routers 101 and 201 calculated based on the calculated NAT characteristics, respectively.

Also, the NAT information may include information other than those described above as long as it is useful for at least one of the apparatus 10, the apparatus 20 and the server 001 to determine the NAT characteristic of a router.

Moreover, although it has been assumed in this embodiment that the apparatus 20 transmits the NAT information notification packet before the apparatus 10, the apparatus 10 may transmit the NAT information notification packet before the apparatus 20.

Moreover, it has been assumed above that the apparatuses 10 and 20 exchange the NAT information notification packets during the information exchange phase using the same server that is used during the NAT characteristic check phase. Alternatively, a different server may be used.

### <P2P Communication Channel Establishment Phase>

FIG. 7 is a sequence diagram showing a detail of a process during the P2P communication channel establishment phase of FIG. 3. In FIG. 7, a case where the router 201 has the PR Cone NAT characteristic or the Symmetric NAT characteristic is shown.

Initially, the communication control unit 1007 of the apparatus 10 transmits a P2P start request packet whose destination port number is set to be the P2P communication port number of the router 201 acquired in step S602 (step S701). Here, a port number set in a source port number varies, depending on the NAT characteristic of the apparatus 10. Its detail will be described below.

At this stage, the router 201 has not yet set NAT so that the router 201 transfers a packet transmitted from the apparatus 10. Therefore, the router 201 abandons the P2P start request packet transmitted in step S701, and does not transfer the P2P start request packet to the apparatus 20. Note that the router 101 sets NAT so that the router 101 transfers to the apparatus 10 a packet whose source port number is set to be the P2P communication port number of the router 201 and whose destination port number is set to be the P2P communication port number of the router 101.

On the other hand, the communication control unit 2007 of the apparatus 20 transmits a P2P start request packet whose destination port number is set to be the P2P communication port number of the router 101 acquired in step S604 (step 702). Here, a port number set in the source port number varies, depending on the NAT characteristic of the router 201. Its detail will be described below.

The router 101 translates the destination IP address (here, the IP address [IPG1] of the router 101) of the P2P start request packet transmitted from the apparatus 20 into the IP address [IPL1] of the apparatus 10, and transfers the IP address [IPL1] to the apparatus 10 (hereinafter simply referred to as "transfer"). In the apparatus 10, in response to the P2P start request packet transferred from the router 101, the communication control unit 1007 transmits the P2P start response packet via the communication unit 1008 to the apparatus 20 (step S703).

Although it has been assumed in this embodiment that the apparatus 10 transmits the P2P start request before the apparatus 20, the order in which the P2P start request is transmitted is not limited to this. Also, when the apparatus 20 transmits the P2P start request before the apparatus 10, a P2P communication channel can be established as in the sequence of FIG. 7.

Also, in FIG. 7, the router 201 abandons the P2P start request packet in step S701 as an exemplary sequence when the router 201 has the PR Cone NAT characteristic or Symmetric NAT characteristic. When the router 201 has the Full Cone NAT or R Cone NAT characteristic, the router 201 has already set NAT so that the router 201 transfers a packet from the router 101 to the apparatus 20 (step S601 of FIG. 6), and therefore, in step S701, the router 201 transfers the P2P start request transmitted from the apparatus 10 to the apparatus 20. Therefore, in step S702, if the apparatus 20 transmits a P2P start request, it can be considered that establishment of a P2P communication channel has been completed. The same is true of the subsequent P2P connection sequence.

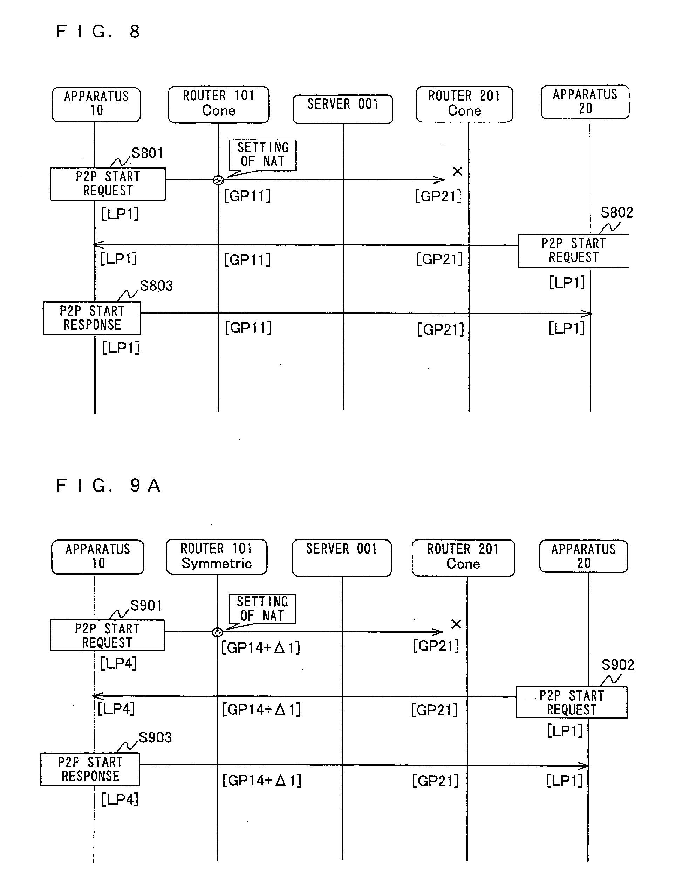

Hereinafter, a connection sequence of the apparatus 10 for establishing a P2P communication channel between the apparatuses 10 and 20, will be described for each NAT characteristic of the router 101 with reference to FIGS. 8 to 10.

### <Connection Sequence 1 : Case Where Router 101 Has Cone NAT>

FIG. 8 is a diagram showing a detail of a connection sequence when the router 101 has Cone NAT. Note that, in FIG. 8, for the sake of simplicity of description, it is assumed that the router 201 has the Cone NAT characteristic.

As described above, the apparatus 10 determines a P2P communication port number of the router 201 connected to the apparatus 20, based on information notified from the apparatus 20 via the server 001 in steps S601 and S602 during the information exchange phase (FIG. 6). When the router 201 has the Cone NAT characteristic, the NAT information notification packet includes [GP21] as the P2P communication port number of the router 201. On the other hand, since the router 101 also has the Cone NAT characteristic, the apparatus 10 notifies the apparatus 20 of [GP11] as a P2P communication port number of the router 101 via the server 001 in steps S603 and S604.

Therefore, the communication control unit 1007 of the apparatus 10 transmits as a P2P start request a packet whose source port number is set to be [LP1] and whose destination port number is set to be [GP21] (step S801). The router 101 assigns the port number [GP11] (=[GP13]) to the packet transmitted from the apparatus 10.

At this stage, the router 201 does not set NAT so that the router 201 transfers to the apparatus 20 the packet that is transmitted from the apparatus 10 and whose destination port number is set to be [GP21]. Therefore, the router 201 abandons the P2P start request packet transmitted in step S801, and does not transfer the P2P start request packet to the apparatus 20. Note that the router 101 sets NAT so that the router 101 transfers to the apparatus 10 (IPL1, LP1) a packet whose source port number is set to be the portnumber [GP21] of the router 201 and whose destination IP address and destination port number are set to be (IPG1, GP11).

Next, the apparatus 20 acquires the P2P communication port number of the router 101 connected to the apparatus 10 based on the information notified from the server 001 during the information exchange phase. The communication control unit 2007 transmits as a P2P start request a packet whose source port number is set to be [LP1] corresponding to [GP21] and whose destination port number is set to be [GP11] (step S802).

The router 101 transfers the P2P start request packet transmitted from the apparatus 20 to the apparatus 10. In the apparatus 10, in response to the P2P start request packet transferred from the router 101, the communication control unit 1007 transmits a P2P start response packet via the communication unit 1008 to the apparatus 20 (step S803).

When the router 101 has the Cone NAT characteristic, a P2P communication channel can be established between the apparatuses 10 and 20 in accordance with the aforementioned process procedure.

### <Connection Sequence 2: Case Where Router 101 Has Symmetric NAT>

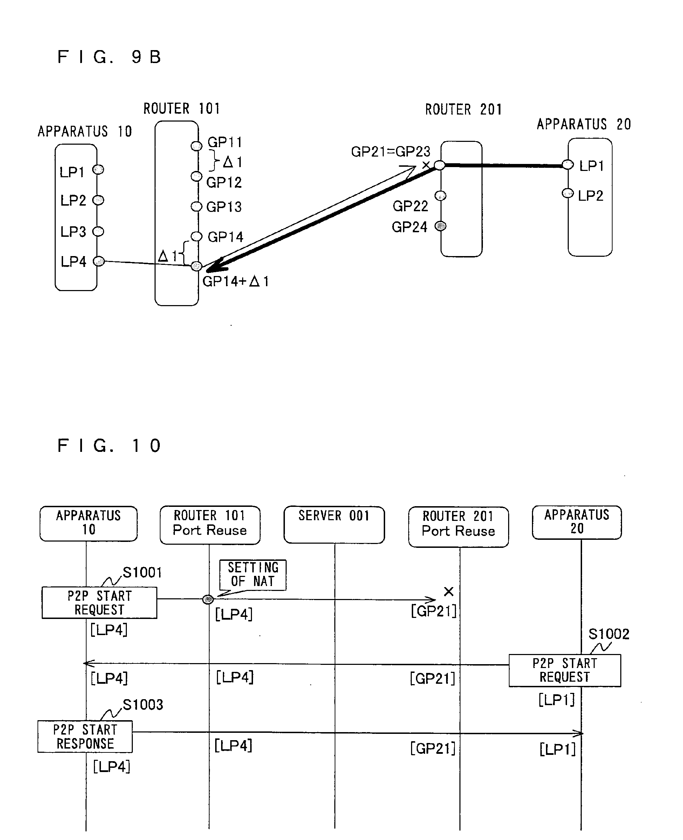

FIG. 9A is a diagram showing a detail of a connection sequence when the router 101 has Symmetric NAT. FIG. 9B is a diagram showing port numbers of FIG. 9A. Note that, for the sake of simplicity of description, it is assumed in FIG. 9 that the router 201 has the Cone NAT characteristic.

As described above, the apparatus 10 determines the P2P communication port number of the router 201 to which the apparatus 20 is connected, based on the information notified from the apparatus 20 in steps S601 and S602 during the information exchange phase (FIG. 6). When the router 201 has the Cone NAT characteristic, the NAT information notification includes [GP21] as the P2P communication port number of the router 201. On the other hand, when the router 101 has the Symmetric NAT characteristic, the apparatus 10 notifies the apparatus 20 of [GP14+Δ1] as the P2P communication port number of the router 101 via the server 001 in steps S603 and S604.

Therefore, the communication control unit 1007 of the apparatus 10 transmits as a P2P start request a packet whose source port number is set to be [LP4] and whose destination port number is set to be [GP21] (step S901).

The router 101 assigns the port number [GP14+Δ1] to the packet transmitted from the apparatus 10 (note that Δ1 is the port assignment interval of the router 101).

At this stage, the router 201 does not set NAT so that the router 201 transfers to the apparatus 20 a packet that is transmitted from the apparatus 10 and whose destination port number is set to be [GP21]. Therefore, the router 201 abandons the P2P start request packet transmitted in step S901, and does not transfer the P2P start request packet to the apparatus 20. Note that the router 101 sets NAT so that the router 101 transfers to the apparatus 10 (IPL1, LP1) a packet whose source port number is set to be the port number [GP21] of the router 201 and whose destination IP address and destination port number are set to be (IPG1, GP14+Δ1).

The apparatus 20 acquires the P2P communication port number of the router 101 to which the apparatus 10 is connected, based on the information notified from the server 001 during the information exchange phase. The communication control unit 2007 transmits as a P2P start request a packet whose source port number is set to be [LP1] corresponding to [GP21] and whose destination port number is set to be [GP14+Δ1] (step S902).

The router 101 transfers the P2P start request packet transmitted from the apparatus 20 to the apparatus 10. In the apparatus 10, in response to the P2P start request packet transferred from the router 101, the communication control unit 1007 transmits the P2P start response packet via the communication unit 1008 to the apparatus 20 (step S903).

When the router 101 has the Symmetric NAT characteristic, a P2P communication channel can be established between the apparatuses 10 and 20 in accordance with the aforementioned process procedure.

Note that it has been assumed in this embodiment that the apparatus 10 sets [LP4] in the source port number. Alternatively, when the router 101 has the Symmetric NAT characteristic, any port number other than the port number [LP1] from which the P2P communication preparation packet is transmitted in step S405, may be set.

More specifically, when the router 101 has the AS Symmetric NAT, the P2P start request packet transmitted from the port number [LP1] is transmitted toward the same destination as that of the P2P communication preparation packet of step S405. Therefore, the router 101 assigns the port number [GP13] to the P2P start request packet.

Also, when the router 101 has the PS Symmetric NAT characteristic, it is predicted that the source port number of a P2P start request packet transmitted from any port number is translated into [GP14+Δ1] by the router 101.

In view of the description above, it is necessary that, for both the AS and PS Symmetric NATs, the apparatus 10 needs to set a port number other than [LP1] into the source port number so as to assign [GP14+Δ1] to a P2P start request packet.

Although it has also been assumed in this embodiment that the apparatus 20 transmits a single P2P start request packet toward the destination port number [GP14+Δ1], the apparatus 20 may transmit a plurality of P2P start request packets. For example, the apparatus 20 may transmit a plurality of P2P start request packets whose destination port numbers may be set to be port numbers that are successively incremented by Δ1 (e.g., [GP14+2×Δ1] and [GP14+3×Δ1] in addition to [GP14+Δ1]) so as to improve the possibility that a P2P communication channel is successfully established.

Moreover, in order to improve the success rate of establishment of a P2P communication channel, the number of P2P start request packets transmitted by the apparatus 20 may be larger than the number of P2P start request packets transmitted by the apparatus 10. Specifically, the apparatus 10 transmits α P2P start request packets whose source port numbers are set to be [LP4] to [LP4+α] (α is a positive integer), respectively, and whose destination port numbers are set to be [GP21]. Meanwhile, the apparatus 20 transmits (m+α) P2P start request packets whose destination port numbers are set to be [GP14+Δ1] to [GP14+(m+α)×Δ1] (m is a positive integer), respectively. In this case, even if the apparatus 10 transmits α packets while another in-home apparatus connected to the router 101 transmits m packets, at least one of the (m+α) P2P start request packets transmitted from the apparatus 20 reaches the apparatus 10. Thereafter, a P2P communication channel is established between the apparatuses 10 and 20 by the apparatus 10 transmitting a P2P start response with respect to any one of the P2P start request packets received from the apparatus 20.

### <Connection Sequence 3: Case Where Router 101 Has Port Reuse>

FIG. 10 is a diagram showing a detail of a connection sequence when the router 101 has Port Reuse. Note that, for the sake of simplicity of description, it is assumed in FIG. 10 that the router 201 has the Cone NAT characteristic.

As described above, the apparatus 10 determines the P2P communication port number of the router 201 to which the apparatus 20 is connected, based on the information notified from the server 001 in steps S601 and S602 during the information exchange phase (FIG. 6). Since the router 201 has the Cone NAT characteristic, the NAT information notification includes [GP21] as the P2P communication port number of the router 201. On the other hand, since the router 101 has the Port Reuse characteristic, the apparatus 10 notifies the apparatus 20 of the port number [LP4] that is to be newly opened as the P2P communication port number of the router 101 during the P2P communication channel establishment phase in steps S603 and S604.

Therefore, the communication control unit 1007 of the apparatus 10 transmits as a P2P start request a packet whose source port number is set to be [LP4] and whose destination port number is set to be [GP21] (step S1001). Note that the router 101 assigns the port number [LP4] to the packet transmitted from the apparatus 10.

At this stage, the router 201 does not set NAT so that the router 201 transfers to the apparatus 20 a packet that is transmitted from the apparatus 10 and whose destination port number is set to be [GP21]. Therefore, the router 201 abandons the P2P start request packet transmitted in step S1001, and does not transfer the P2P start request packet to the apparatus 20. Note that, at this stage, the router 101 sets NAT so that the router 101 transfers to the apparatus 10 (IPL1, LP4) a packet whose source port number is set to be the port number [GP21] of the router 201 and whose destination IP address and destination port number are set to be (IPG1, LP4).

On the other hand, the apparatus 20 acquires the P2P communication port number of the router 101 to which the apparatus 10 is connected, based on the information notified from the server 001 during the information exchange phase. The communication control unit 2007 transmits as a P2P start request a packet whose source port number is set to be [LP1] corresponding to [GP21] and whose destination port number is set to be [LP4] (step S1002).

The router 101 transfers the P2P start request packet transmitted from the apparatus 20 to the apparatus 10. In the apparatus 10, in response to the P2P start request packet transferred from the router 101, the communication control unit 1007 transmits a P2P start response packet via the communication unit 1008 to the apparatus 20 (step S1003).

When the router 101 has the Port Reuse characteristic, a P2P communication channel can be established between the apparatuses 10 and 20 in accordance with the aforementioned process procedure.

Note that, in the aforementioned NAT characteristic determining process (FIG. 4B), there is the possibility that Cone NAT with Port Reuse is determined to be Symmetric NAT. However, Symmetric NAT with Port Reuse that is available at the present time is not known. Therefore, in the case of Port Reuse, a connection sequence of Cone NAT may be executed.

As described above, in the communication system of this embodiment, the apparatuses 10 and 20 can determine the Cone NAT characteristic, the Symmetric NAT characteristic and the Port Reuse characteristic of a router connected thereto by transmitting and receiving a packet to and from the single server 001 whose single port [SP1] is open. The apparatuses 10 and 20 can establish a P2P communication channel after exchanging port numbers of routers that are to be used for P2P communication, based on the result of determination of their NAT characteristics.

Although it has been assumed in each of the sequence diagrams of FIGS. 8 to 10 that the apparatus 10 transmits a P2P start request before the apparatus 20, the apparatus 20 may transmit a P2P start request before the apparatus 10.

In order to improve the possibility that a P2P communication channel is successfully established during the P2P communication channel establishment phase, the apparatus 10 may notify the apparatus 20 of a plurality of port numbers during the information exchange phase.

Although a router whose port number assigned is incremented every time a port is assigned to a packet has also been shown in this embodiment, the present invention can be similarly applied to a router whose port number assigned is decremented every time a port is assigned to a packet.

### (Embodiment 2)

Hereinafter, a communication system according to Embodiment 2 of the present invention will be described, mainly indicating differences between Embodiments 1 and 2.

Apparatuses 10 and 20 according to this embodiment each further comprise, in addition to the configuration of Embodiment 1, a storage unit for storing a temporarily determined NAT characteristic, and reuse the NAT characteristic stored in the storage unit when a P2P communication channel is established at the second time and thereafter. Thereby, when a P2 P communication channel is established at the second time and thereafter, the NAT characteristic check phase can be removed.

Also, the apparatuses 10 and 20 may proceed a P2P communication channel establishing process without executing the NAT check phase process, and may execute the NAT characteristic check phase process only after a P2P communication channel fails to be established.

Note that not only the NAT characteristic, but also the difference values Δ1 and Δ2 may be stored in the storage unit. In this case, when a P2P communication channel is established at the second time and thereafter, the relay characteristic determining units 1004 and 2004 may determine the NAT characteristic based on the difference values Δ1 and Δ2 stored in the storage unit in accordance with the flowchart of FIG. 4B.

According to the communication system of this embodiment, the number of times of checking of the NAT characteristic by the apparatuses 10 and 20 is reduced, so that the second P2P communication channel establishing process and thereafter can be efficiently executed.

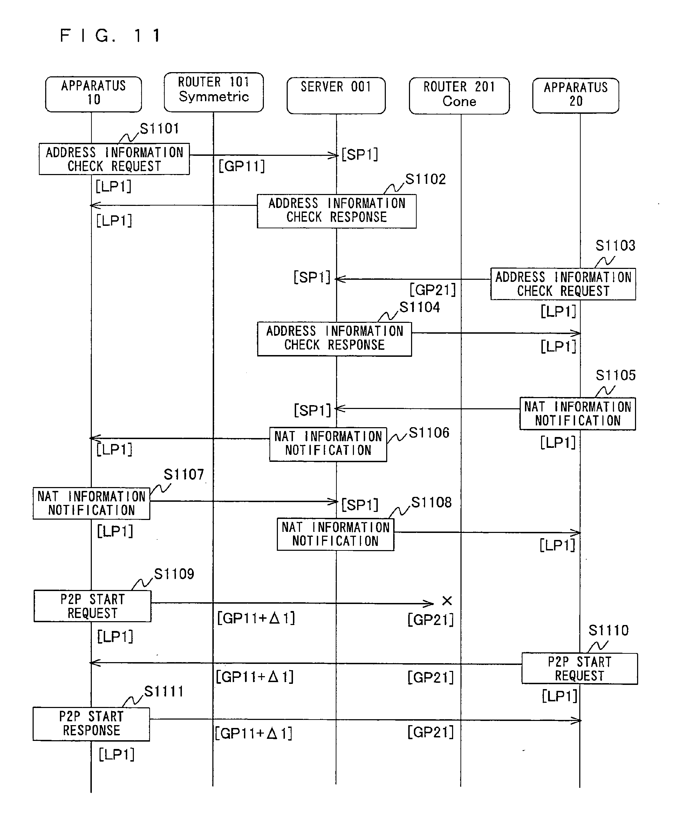

FIG. 11 is a connection sequence diagram according to Embodiment 2 of the present invention. In the example of FIG. 11, it is assumed that the router 101 has the Symmetric NAT characteristic and the router 201 has the Cone NAT characteristic.

It is hereinafter assumed that the NAT characteristics of the routers 101 and 201 that have been once checked by the apparatuses 10 and 20 and the port assignment intervals Δ1 of the router 101 and the router 201 are stored in the storage unit. Although the NAT characteristic and the port assignment interval Δ1 are stored in this embodiment, the two difference values Δ1 and Δ2 may be stored and the NAT characteristic may be determined based on the two difference values as required.

### <Reference Port Number Acquisition Phase>

The apparatus 10 has already checked the NAT characteristic and the port assignment interval of the router 101 during the NAT characteristic check phase that was executed when a P2P communication channel was previously established. Therefore, in this embodiment, the apparatus 10 does not execute the processes during the NAT characteristic check phase and the preparation phase, and instead, acquires a reference port for determining a P2P communication port number.

Initially, in the apparatus 10, the address information check request transmitting unit 1001 transmits an address information check request packet whose source port number is set to be the port number [LP1] of the apparatus 10 and whose destination port number is set to be the port number [SP1] of the server 001 (step S1101).

In the server 001, the address information checking unit 0011 transmits the source port number of an address information check request packet, i . e. , an address information check response packet including the port number [GP11] of the router 101, via the communication unit 0014 (step S1102).

The apparatus 10 uses the port number [GP11] acquired in step S1102 as a reference port number for determining a P2P communication port number.

Similarly, the apparatus 20 does not execute the processes during the NAT characteristic check phase and the preparation phase, and acquires the reference port number [GP21] for determining a P2P communication port number (steps S1103 and S1104).

Note that, in FIG. 11, for the sake of convenience of illustration, the apparatus 10 transmits an address information check request before the apparatus 20. Alternatively, the apparatus 20 may transmit an address information check request before the apparatus 10. In other words, the address information check requests of the apparatuses 10 and 20 may be transmitted in any order and may be executed with any timing as long as they are completed before the information exchange phase.

### <Information Exchange Phase>

Next, the apparatus 20 transmits a NAT information notification packet including a P2P communication port number of the router 201 to the server 001 (step S1105). In the example of FIG. 11, since the router 201 has the Cone NAT characteristic, the NAT information notification includes, as a P2P communication port number, the reference port number [GP21] acquired in step S1104.

Next, in the server 001, the relay information transferring unit 0013, when receiving the NAT information notification packet transmitted from the apparatus 20, transfers the received NAT information notification packet via the communication unit 0014 to the apparatus 10 (step S1106).

Similarly, in the apparatus 10, the relay information transmitting unit 1005 transmits a NAT information notification packet including a P2P communication port number of the router 101 to the server 001 (step S1107). In the example of FIG. 11, since the router 101 has Symmetric NAT, the NAT information notification includes as a P2P communication port number a value [GP11+Δ1] obtained by summing the reference port number [GP11] acquired in step S1102 and the port number assignment interval Δ1 stored in the storage unit during the previous NAT characteristic check phase.

Next, in the server 001, the relay information transferring unit 0013, when receiving the NAT information notification packet transmitted from the apparatus 10, transfers the received NAT information notification packet via the communication unit 0014 to the apparatus 20 (step S1108).

Although it has been assumed in this embodiment that the apparatus 20 transmits a NAT information notification packet before the apparatus 10, the apparatus 10 may transmit a NAT information notification packet before the apparatus 20.

As in the example of FIG. 11, when neither the router 101 nor the router 201 has Port Reuse, the reference port number acquisition phase (steps S1101 to S1104) needs to be executed. Note that when the NAT characteristics stored in the apparatuses 10 and 20 are Port Reuse, port numbers of the routers 101 and 201 that are to be opened in the subsequent process can be easily predicted. Therefore, the apparatuses 10 and 20 may skip the reference port number acquisition phase and go to the information exchange phase, and transmit a NAT information notification including the port number [LP4] that is to be used for P2P communication by the apparatuses 10 and 20.

### <Connection Phase>

The communication control unit 1007 of the apparatus 10 acquires the P2P communication port number [GP21] of the router 201. The communication control unit 1007 transmits a P2P start request packet whose source port number is set to be [LP1] and whose destination port number is set to be [GP21], via the communication unit 1008 to the router 201 (step S1109). In the example of FIG. 11, since the router 101 has the Symmetric NAT characteristic, the port number [GP11+Δ1] is assigned to the packet transmitted from the apparatus 10 (note that Δ1 is the port assignment interval of the router 101).

Although [LP1] is set in the source port number in this embodiment, any port number may be set when the router 101 has the Symmetric NAT characteristic. This is because, in this case, the source port number of a P2P start request packet transmitted from any port number is considered to be translated into [GP11+Δ1] by the router 101.

When a P2P start request packet is transmitted in step S1109, the router 201 does not set NAT so that the router 201 transfers to the apparatus 20 a packet whose destination port number is set to be [GP21]. Therefore, the router 201 abandons the received P2P start request packet, and does not transfer the packet to the apparatus 20. On the other hand, the router 101 sets NAT so that, by transferring a P2P start request packet, the router 101 transfers to the apparatus 10 (IPL1, LP1) a packet whose destination is set to be (IPG1, GP11+Δ1) and whose source port number is set to be [GP21].

On the other hand, the apparatus 20 acquires NAT characteristic information including the P2P communication port number [GP11+Δ1] of the router 101 during the information exchange phase. The apparatus 20 transmits a P2P start request packet whose source port number is set to be [LP1] and whose destination port number is set to be [GP11+Δ1] (step S1110).

The router 101 transfers the P2P start request packet transmitted from the apparatus 20 to the apparatus 10. The apparatus 10, when receiving the P2P start request packet transferred by the router 101, transmits the P2P start response packet to the apparatus 20 (step S1111).

Note that, during the P2P communication channel establishment phase (steps S1109 to S1111), when the apparatuses 10 and 20 fail to establish a P2P communication channel, the apparatuses 10 and 20 may each repeat the connection process from the NAT characteristic check phase.

### (Embodiment 3)

In Embodiment 3, an example will be described in which a communication system according to the present invention is achieved using a single SIP server having a SIP (Session Initiation Protocol: RFC3261, RFC3581), which is a general-purpose protocol.

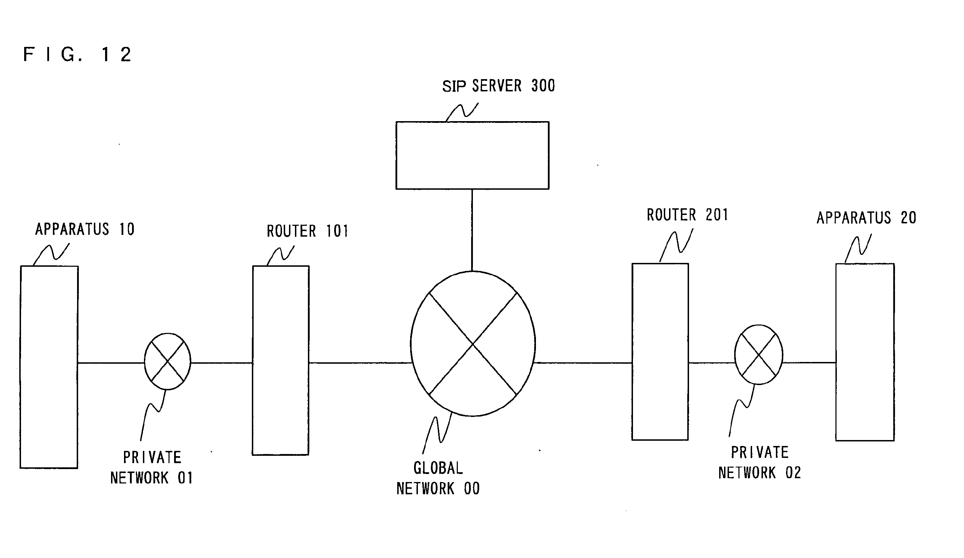

FIG. 12 is a block diagram showing a whole configuration of a communication system according to Embodiment 3 of the present invention.

As in Embodiment 1 (FIG. 1), private networks 01 and 02 are connected to a global network 00 via a router 101 having a global IP address [IPG1] and a router 201 having a global IP address [IPG2], respectively. A SIP server 300 that has a global IP address [IPS] and has a port number [SP1] open to the global network 00 is also connected to the global network 00. Moreover, an apparatus 10 having a local IP address [IPL1] is connected to the private network 01, and an apparatus 20 having a local IP address [IPL2] is connected to the private network 02.

Note that the SIP server 300 has a configuration (FIG. 2C) and a function similar to those of the server 001 of Embodiment 1 in addition to the SIP protocol processing capability. The apparatuses 10 and 20 are an apparatus (e.g., an IP telephone, etc.) that performs a call control for P2P communication via the SIP server 300 using the SIP protocol. The apparatuses 10 and 20 have a configuration and a function similar to those of Embodiment 1 (FIGS. 2A and 2B). Therefore, the configurations of the apparatuses 10 and 20 and the SIP server 300 will not be described in detail.

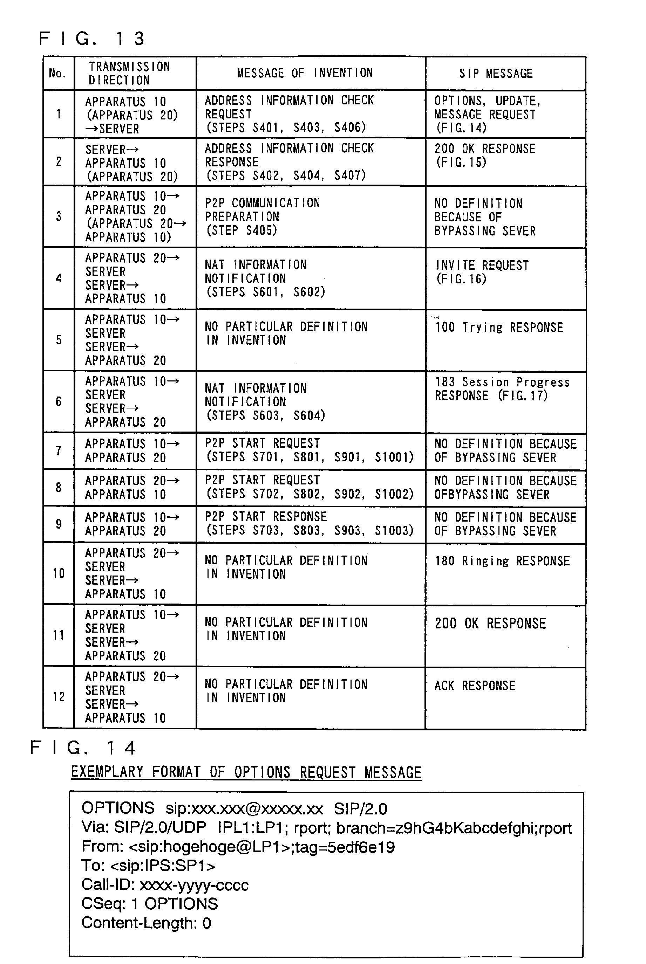

FIG. 13 is a diagram showing a correspondence relationship between packets transmitted and received for establishment of a P2P communication channel and SIP messages.

In this embodiment, the apparatuses 10 and 20 exchange information (e.g., an IP address and a port number) required to establish a P2P communication channel, using SIP messages. Note that a message that is directly exchanged between the apparatuses 10 and 20 is not particularly limited, and may be either a SIP message or a non-SIP message.

Hereinafter, messages Nos. 1 to 12 that are transmitted and received in the communication system of this embodiment will be sequentially described with reference to FIG. 13.

### (Message No.1: Address Information Check Request)

In this embodiment, an address information check request that is transmitted to a server by the apparatuses 10 and 20 (steps S401, S403 and S406 of FIG. 4A) is implemented by any of an OPTIONS request, an UPDATE request and a MESSAGE request of SIP. In the following example, a case where an address information check request is transmitted to a server using the OPTIONS request will be described. An exemplary message format of the OPTIONS request is shown in FIG. 14.

### (Message No. 2: Address Information Check Response)

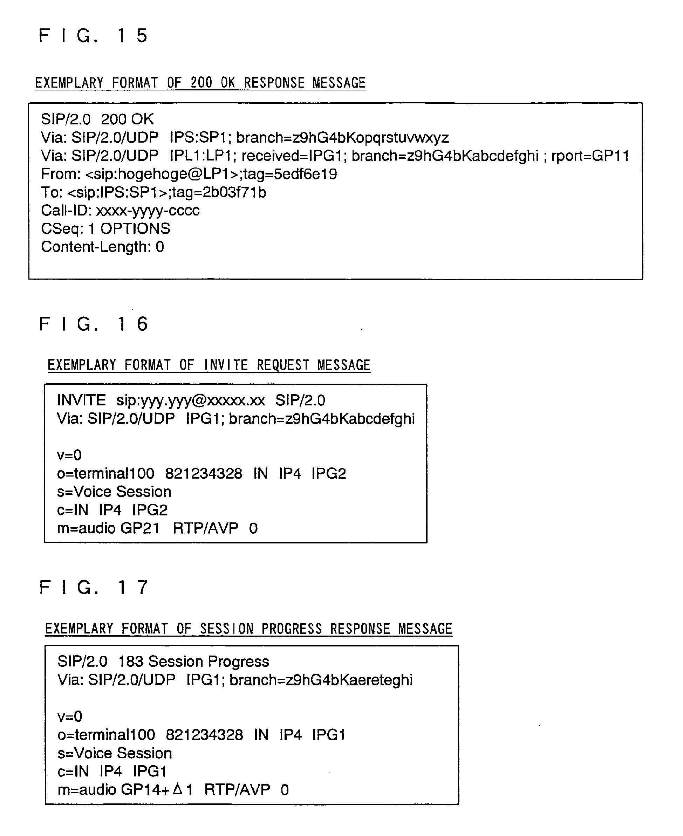

An address information check response that is returned from a server to each of the apparatuses 10 and 20 (steps S402, S404 and S407 of FIG. 4A) is implemented by a 200 OK response of SIP. An exemplary message format of the 200 OK response is shown in FIG. 15.

### (Message No. 3: Preparation of P2P Communication)

A P2P preparation packet (step S405 of FIG. 4A) that is transmitted from the apparatus 10 toward the apparatus 20 or from the apparatus 20 toward the apparatus 10, is not transmitted via a server, so that it is not necessary to use a call control message of SIP. Therefore, the P2P preparation packet may include a message in any format and will not be shown.

### (Message No. 4: NAT Information Notification)

A NAT information notification that is returned from a server to each of the apparatuses 10 and 20 (steps S601 and S602 of FIG. 6) is implemented by an INVITE request of SIP. An exemplary message format of the INVITE request is shown in FIG. 16.

### (Message No. 5)

Message No. 5 is a 100 Trying response that is used to send a notification of "trying" in a call control from the apparatus 10 to a server or from a server to the apparatus 20. Note that this message is not used so that the system of this embodiment establishes a P2P communication channel. Amessage format thereof is not shown.

### (Message No. 6: NAT Information Notification)

A NAT information notification that is transmitted from the apparatus 10 to a server or from a server to the apparatus 20 (steps S603 and S604 of FIG. 6) is implemented by a 183 Session Progress response of SIP. A message format of the 183 Session Progress response is shown in FIG. 17.

### (Message No. 7: P2P Start Request)

A P2P start request that is transmitted from the apparatus 10 to the apparatus 20 (step S701 of FIG. 7, step S801 of FIG. 8, step S901 of FIG. 9, and step S1001 of FIG. 10) is not transmitted via a server, and therefore, may not be a call control message of SIP. In other words, the P2P start request may be a message in any format and is not shown.

### (Message No. 8: P2P Start Request)

A P2P start request that is transmitted from the apparatus 20 to the apparatus 10 (step S702 of FIG. 7, step S802 of FIG. 8, step 902 of FIG. 9, and step S1002 of FIG. 10) is not a message that is transmitted via a server. Therefore, the P2P start request that is transmitted from the apparatus 20 to the apparatus 10 does not necessarily need to be a SIP message, and may be a message in any format.

### (Message No. 9: P2P Start Response)

A P2P start response that is transmitted from the apparatus 10 to the apparatus 20 (step S703 of FIG. 7, step S803 of FIG. 8, step S903 of FIG. 9, and step S1003 of FIG. 10) is not a message that is transmitted via a server. Therefore, the P2P start response that is transmitted from the apparatus 10 to the apparatus 20 does not necessarily need to be a SIP message, and may be a message in any format.

### (Message No. 10)

Message No. 10 is a 180 Ringing response that is used to send a notification of "calling" in a call control from the apparatus 20 to a server or from a server to the apparatus 10. Note that this message is not used so that the system of this embodiment establishes a P2P communication channel. Also, its message format is not shown.

### (Message No. 11)

Message No. 11 is a 200 OK response that is used to send a notification of "success of request" in a call control from the apparatus 10 to a server or from a server to the apparatus 20. Note that this message is not used so that the system of this embodiment establishes a P2P communication channel. Also, its message format is not shown.

### (Message No. 12)

Message No. 12 is an ACK request that is used to sent a notification of "establishment of session (P2P communication channel)" in a call control from the apparatus 20 to a server or from a server to the apparatus 10. Note that this message is not used so that the system of this embodiment establishes a P2P communication channel. Also, its message format is not shown.

Note that the message correspondence relationship of FIG. 13 is only for illustrative purposes. Information required to execute the P2P communication channel establishing method of the present invention (messages Nos.1, 2, 4 and 6) may be transmitted and received using other messages defined in SIP.

Hereinafter, a control sequence with which the apparatuses 10 and 20 of this embodiment check the NAT characteristics of the routers 101 and 201 using the SIP protocol, and further, establish a P2P communication channel, will be described with reference to FIGS. 14 to 19.

### <NAT Characteristic Check Phase and Preparation Phase>

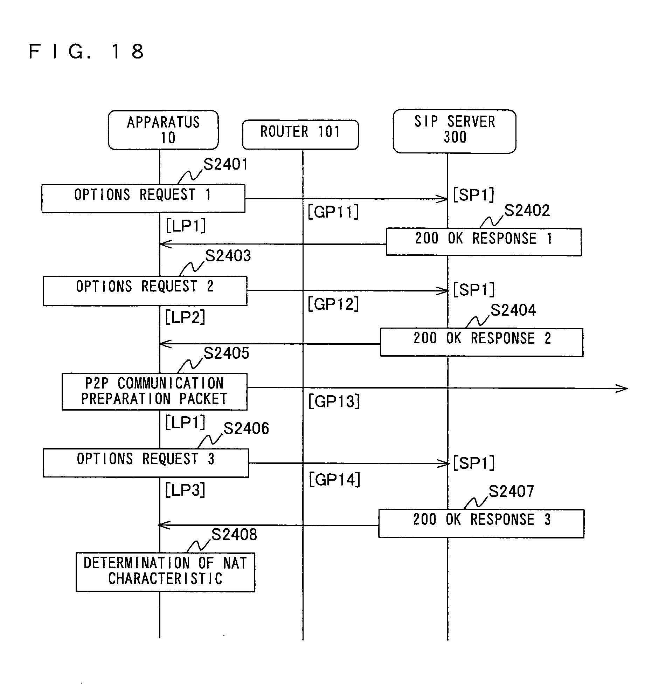

FIG. 18 is a sequence diagram showing details of processes during the NAT characteristic check phase and the preparation phase using the SIP protocol.

Initially, the apparatus 10 transmits an OPTIONS request packet 1 to the SIP server 300 (step S2401). More specifically, the address information check request transmitting unit 1001 creates the OPTIONS request packet 1 whose source port number and destination port number are set to be the port number [LP1] of the apparatus 10 and the port number [SP1] of the SIP server 300, and further, in a data portion of which an OPTIONS request message of SIP is inserted.

In this case, as shown in FIG. 14, a "rport parameter" is set in a "Via header" of the OPTIONS request message. The Via header is used to describe a path through which a request has been passed and a path through which a request is to be passed during routing. Depending on whether or not the rport parameter is described in this portion, the SIP server 300 can identify a received packet as an address information check request.

Next, in response to the OPTIONS request packet 1 transmitted from the apparatus 10, the SIP server 300 returns the 200 OK response 1 to the apparatus (step S2402). More specifically, the communication unit 0014 receives the OPTIONS request packet 1, and transfers the received packet to the address information checking unit 0011.

Since an IP address ([IPL1] in the example of FIG. 14) set in a "sent-by parameter" of the Via header is different from the source IP address of the transferred packet, the address information checking unit 0011 references the header of the transferred packet to extract the source IP address, i.e., the IP address [IPG1] of the router 101. Also, since the rport parameter is designated in the Via header, the address information checking unit 0011 references the header of the transferred packet to extract the source port number, i.e., the port number [GP11] set by the router 101. The address information checking unit 0011 outputs the extracted source IP address and source port number (IPG1, GP11) to the address information transmitting unit 0012.

The address information transmitting unit 0012 generates a 200 OK response packet 1 including in a data portion thereof the IP address and the port number (IPG1, GP11) of the router 101 received from the address information checking unit 0011, and outputs the generated packet to the communication unit 0014. More specifically, as shown in FIG. 15, the address information transmitting unit 0012 transmits to the router 101 the 200 OK response packet 1 having a 200 OK message format in which the IP address [IPG1] of the router 101 is described in a "received parameter" thereof and the port number [GP11] of the router 101 is described in a "rport parameter" thereof, and further, in which a message additionally having a "Via header" in which address information of a SIP server is added is inserted in a data portion thereof.

Next, the router 101 transfers the packet received from the address information transmitting unit 0012 to the apparatus 10. Also, in the apparatus 10, the communication unit 1008, when receiving the 200 OK response packet 1, transfers the received packet to the address information receiving unit 1002.

Next, the apparatus 10 transmits an OPTIONS request packet 2 to the server 001 (step S2403). More specifically, the address information check request transmitting unit 1001 transmits the OPTIONS request packet 2 whose source port number is set to be the port number [LP2] of the apparatus 10 and whose destination port number is set to be the port number [SP1] of the SIP server 300. As in the OPTIONS request packet 1, the "rport parameter" is also set in the via header of the OPTIONS request packet 2.

Next, in response to the OPTIONS request packet 2 transmitted from the apparatus 10, the SIP server 300 returns a 200 OK response packet 2 to the apparatus (step S2404). More specifically, the communication unit 0014 receives the OPTIONS request packet 2 and transfers the received packet to the address information checking unit 0011. The address information checking unit 0011 references the header of the transferred packet to extract the source IP address and the port number, i.e., the IP address and the port number (IPG1, GP12) of the router 101, and outputs the extracted IP address and port number (IPG1, GP12) to the address information transmitting unit 0012.

The address information transmitting unit 0012 generates the 200 OK response packet 2 including, in a data portion thereof, the IP address and the port number (IPG1, GP12) of the router 101 received from the address information checking unit 0011, and outputs the generated packet to the communication unit 0014. More specifically, as shown in FIG. 15, the address information transmitting unit 0012 transmits to the router 101 the 200 OK response packet 2 in the 200 OK message format in which the IP address [IPG1] of the router 101 is described in the "received parameter", the port number [GP12] of the router 101 is described in the "rport parameter", and further, in which a message additionally having a "Via header" including address information of a SIP server is inserted in the data portion.

The router 101 the communication unit 0014 transfers the packet received from the address information transmitting unit 0012 to the apparatus 10. Also, in the apparatus 10, the communication unit 1008, when receiving the 200 OK response packet 2, transfers the received packet to the address information receiving unit 1002.

Next, the apparatus 10 transmits a P2P communication preparation packet to the apparatus 20 (step S2405). More specifically, the apparatus 10 transmits to the router 101 a packet whose source port number is set to be the port number [LP1] of the apparatus 10 and whose destination is set to be an IP address and a port number of the apparatus 20, so as to prepare in the router 101 the port number [GP13] that is assigned with respect to the apparatus 20 having an IP address different from the server.

Next, the apparatus 10 transmits an OPTIONS request packet 3 to the server 001 (step S2406). More specifically, the address information check request transmitting unit 1001 transmits as the OPTIONS request packet 3 a packet whose source port number is set to be the port number [LP3] of the apparatus 10 and whose destination port number is set to be the port number [SP1] of the SIP server 300. As in the OPTIONS request packets 1 and 2, the "rport parameter" is set in the Via header of the OPTIONS request packet 3.

In response to OPTIONS 3 transmitted form the apparatus 10, the SIP server 300 returns a 200 OK response 3 to the apparatus 10 (step S2407). More specifically, the communication unit 0014 receives the address information check request packet 3, and transfers the received packet to the address information checking unit 0011. The address information checking unit 0011 references the header of the transferred packet, and outputs the source IP address and the port number, i.e., the IP address and the port number (IPG1, GP14) of the router 101 to the address information transmitting unit 0012.

The address information transmitting unit 0012 generates a 200 OK response packet 3 including, in a data portion thereof, the IP address and the port number (IPG1, GP14) of the router 101 received from the address information checking unit, and outputs the generated packet to the communication unit 0014. More specifically, the address information transmitting unit 0012 transmits to the router 101 the 200 OK response packet 3 in the 200 OK message format of FIG. 15 in which the IP address [IPG1] of the router 101 is described in the "received parameter", the port number [GP14] of the router 101 is described in the "rport parameter", and further, in which a message additionally having a "Via header" including address information of a SIP server is inserted in the data portion.

The router 101 the communication unit 0014 transfers the packet received from the address information transmitting unit 0012 to the apparatus 10. Also, in the apparatus 10, the communication unit 1008, when receiving the 200 OK response packet 3, transfers the received packet to the address information receiving unit 1002.

Next, the apparatus 10 determines the NAT characteristic of the router 101 based on the 200 OK response packets 1 to 3 (step S2408). More specifically, in the apparatus 10, the relay characteristic determining unit 1004 determines the NAT characteristic of the router 101 based on the three port numbers [GP11], [GP12] and [GP14] of the router 101 included in the 200 OK response packets 1 to 3 in accordance with the process flow of FIG. 4B of Embodiment 1.

The apparatus 20 checks the NAT characteristic of the router 201 in accordance with a procedure similar to that of FIG. 18, to prepare a port of the router 201 that is to be used for P2P communication.

Note that the destination port number of a packet transmitted by the apparatus 10 is preferably a port number that is actually used by the router 201 (e.g., a port number that is assigned to a packet of the apparatus 20 by the router 201 when the apparatus 20 communicates with the SIP server 300). This is because, if the router 201 has the intrusion detecting function, then when the router 201 receives from the apparatus 10 a P2P communication preparation packet whose destination port number is set to be a port number that is not used for communication, the packet is likely to be erroneously detected as an unauthorized access packet. The router 201, when detecting an unauthorized access packet, abandons all subsequent packets transmitted from the apparatus 10. Therefore, the apparatus 10 is likely to become impossible to communicate with the apparatus 20.

Alternatively, the apparatus 10 may adjust the TTL (Time To Live) value of a P2P communication preparation packet so that the packet does not reach the router 201. The reason why the apparatus 10 transmits the P2P communication preparation packet is that a port number for P2P communication with the apparatus 20 is prepared in the router 101 to which the apparatus 10 is connected. Therefore, the P2P communication preparation packet does not necessarily need to reach the router 201. Therefore, the apparatus 10 may adjust the TLL value so that the P2P communication preparation packet reaches the router 101 and does not reach the router 201.

In step S2405, the router 101 sets NAT so that the router 101 can receive a packet that is transmitted from the apparatus 20 via the router 201 to the router 101 (IPG1, GP13). A method with which the router 101 sets NAT varies, depending on the NAT characteristic (FIGS. 23A to 23E), and will not be described.

Although it has also been assumed in this embodiment that the P2P communication preparation packet is transmitted after transmission of the OPTIONS request packet 2, the transmission timing of the P2P communication preparation packet is not limited to this. More specifically, the P2P communication preparation packet may be transmitted before transmission of the OPTIONS request packet 3, and may be transmitted next after the OPTIONS request packet 1. Also, the source port number of the P2P communication preparation packet does not necessarily need to be [LP1], and may be the same as any of the source port numbers [LP1] to [LP3] of the OPTIONS request packets 1 to 3.

Moreover, although the NAT characteristic check phase (steps S2401 to S2404 and steps S2406 to S2408) and the preparation phase (step S2405) are shown together in FIG. 18 for the sake of convenience of description, the NAT characteristic check phase and the preparation phase may be separated from each other.

Moreover, the NAT characteristic check phase and the preparation phase do not necessarily need to be executed in the order shown in this embodiment. Therefore, the steps may be executed in an order different from that of this embodiment as long as the apparatuses 10 and 20 complete the NAT characteristic check phase and the preparation phase before the subsequent information exchange phase.

### <Information Exchange Phase and P2P Communication Channel Establishment Phase>

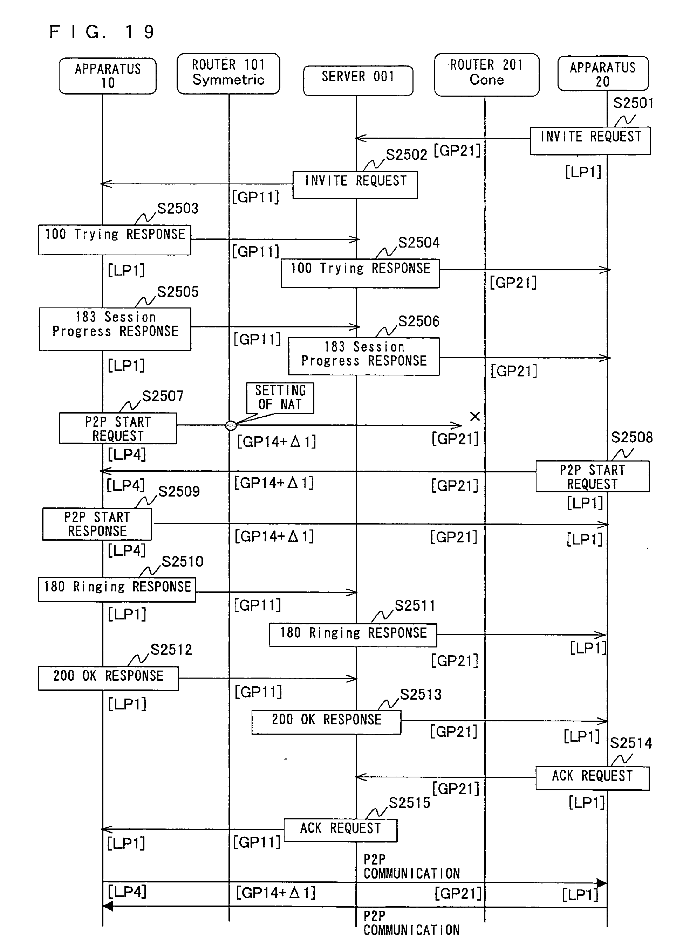

FIG. 19 is a sequence diagram showing a control process for allowing the communication system of the third embodiment of the present invention to establish a P2P communication channel. FIG. 19 shows, as an example, a sequence where the router 101 has Symmetric NAT and the router 202 has Cone NAT.

Steps S2501 and S2502 and steps S2505 and S2506 shown in FIG. 19 correspond to the information exchange phase of Embodiment 1 (FIG. 6). Also, steps S2507 to S2509 of FIG. 19 correspond to the P2P communication channel establishment phase of Embodiment 1 (FIG. 9A). Steps S2503 and S2504 and steps S2510 to S2515 shown in FIG. 19 are a general sequence of the SIP protocol, and are not particularly limited in the P2P communication channel establishing method of the present invention.

Hereinafter, a sequence indicating details of processes during the information exchange phase and the P2P communication channel establishment phase using the SIP protocol will be described with reference to FIG. 19.

As described above, during the information exchange phase, each apparatus determines a P2P communication port number of a router to which the apparatus is connected, based on the NAT characteristic of the router, and notifies a server of the determined port number. A port number that is provided in a router for P2P communication is determined by the procedure described in Embodiment 1.

Initially, the apparatus 20 notifies the SIP server 300 of the P2P communication port number of the router 201 to which the apparatus 20 is connected (step 52501). More specifically, since the NAT characteristic of the router 201 is determined during the NAT characteristic check phase to be Cone NAT, the relay information transmitting unit 2005 generates an INVITE request packet including, in a data portion thereof, the port number [GP21] as a P2P communication port number.

In this case, the relay information transmitting unit 2005 describes, in the INVITE request message of FIG. 16, the IP address [IPG2] of the router 201 in either or both of an "o parameter" and a "c parameter" in a message body thereof (SDP: Session Description Protocol), and the P2P communication port number [GP21] of the router 201 in an "m parameter". The relay information transmitting unit 2005 transmits the generated INVITE request packet via the communication unit 2008 to the SIP server 300.

The SIP server 300, when receiving the INVITE request packet, transfers the received INVITE request packet to the apparatus 10 (step S2502). More specifically, in the SIP server 300, the relay information transferring unit 0013 receives the INVITE request packet transmitted from the apparatus 20 via the communication unit 0014, and transmits the received INVITE request packet via the communication unit 0014 to the apparatus 10.

When receiving the INVITE request, the apparatus 10 transmits a 100 Trying response (the message format is not shown) packet via the SIP server 300 to the apparatus 20 so as to notify the apparatus 20 of a "trying state" (steps S2503 and S2504).

Next, the apparatus 10 notifies the SIP server 300 of the P2P communication port number of the router 101 to which the apparatus 10 is connected (step S2505). More specifically, since the NAT characteristic of the router 101 is determined to be Symmetric NAT during the NAT characteristic check phase, the relay information transmitting unit 1005 generates a 183 Session Progress response packet including, in a data portion thereof, the port number [GP14+Δ1] as a P2P communication port number.

In this case, the relay information transmitting unit 1005 describes, in the 183 Session Progress response message of FIG. 17, the IP address [IPG1] of the router 101 in either or both of the "o parameter" and "c parameter" of the message body (SDP), and the P2P communication port number [GP14+Δ1] of the router 101 in the "m parameter". The relay information transmitting unit 1005 transmits the generated 183 Session Progress response packet via the communication unit 1008 to the SIP server 300.

The SIP server 300, when receiving the 183 Session Progress response packet, transfers the received 183 Session Progress response packet to the apparatus 20 (step S2506). More specifically, in the SIP server 300, the relay information transferring unit 0013 receives the 183 Session Progress response packet transmitted from the apparatus 10 via the communication unit 0014, and transmits the received 183 Session Progress response packet via the communication unit 0014 to the apparatus 20.

Although the apparatus 20 transmits an INVITE request packet before the apparatus 10 in this embodiment, the apparatus 10 may transmit an INVITE request packet before the apparatus 20. In this case, the apparatus 20 transmits a 100 Trying response and a 183 Session Progress response packet.

The apparatus 10, when receiving the INVITE request packet from the apparatus 20 in steps S2501 and S2502 during the information exchange phase, determines the P2P communication port number of the router 201 to which the apparatus 20 is connected, based on information described in the message body (SDP). In the example of FIG. 19, since the router 201 has the Cone NAT characteristic, [GP21] is described as the P2P communication port number of the router 201 in the "m parameter" of SDP. On the other hand, since the router 101 has the Symmetric NAT characteristic, the apparatus 10 notifies the apparatus 20 of [GP14+Δ1] as the P2P communication port number of the router 101 in steps S2505 and S2506.

Therefore, the communication control unit 1007 of the apparatus 10 transmits as a P2P start request a packet whose source port number is set to be [LP4] and whose destination port number is set to be [GP21] (step S2507).

At this stage, the router 201 does not set NAT so that the router 201 transfers a packet that is transmitted from the apparatus 10 and whose destination port number is set to be [GP21]. Therefore, the router 201 abandons the P2P start request packet transmitted in step S2505, and does not transfer the apparatus 20. At this stage, the router 101 sets NAT so that the router 101 transfers to the apparatus 10 (IPL1, LP1) a packet whose source port number is set to be the port number [GP21] of the router 201 and whose destination IP address and destination port number are set to be (IPG1, GP14+Δ1).

On the other hand, the apparatus 20 acquires the P2P communication port number of the router 101 to which the apparatus 10 is connected, based on information notified from the apparatus 10 during the information exchange phase. The communication control unit 2007 transmits as a P2P start request a packet whose source port number is set to be [LP1] corresponding to [GP21] and whose destination port number is set to be [GP14+Δ1] (step S2508).

The router 101 transfers the P2P start request packet transmitted from the apparatus 20 to the apparatus 10. In the apparatus 10, in response to the P2P start request packet transferred from the router 101, the communication control unit 1007 transmits a P2P start response packet via the communication unit 1008 to the apparatus 20 (step S2509).

After transmitting a P2P start response to establish a P2P communication channel, the apparatus 10 transmits a 180 Ringing response (the message format is not shown) packet via the SIP server 300 to the apparatus 20 so as to notify the apparatus 20 of a "calling state (e. g. , a state in which the bell of a telephone is ringing)" (steps S2510 and S2511).

Thereafter, when the user of the apparatus 10 lifts the handset, the apparatus 10 transmits a 200 OK response (the message format is not shown) packet via the SIP server 300 to the apparatus 20 so as to notify the apparatus 20 of a change from the "calling state" to a "calling completed state (a state in which the user lifts the handset)" (steps S2512 and S2513).

The apparatus 20, when receiving the 200 OK response packet from the SIP server 300, transmits an ACK request (themessage format is not shown) packet via the SIP server 300 to the apparatus 10 so as to notify the apparatus 10 of a "call established state" (steps S2514 and S2515).

After step S2515, P2P communication (e.g., conversation using an IP telephone, etc.) can be performed between the apparatuses 10 and 20.

Although [LP4] is set in the source port number in this embodiment, any port number other than the port number [LP1] with which a P2P communication preparation packet is transmitted in step S405 may be set when the characteristic of a router is Symmetric NAT. More specifically, when the router 101 has AS Symmetric NAT, the P2P start request packet transmitted from [LP1] is transmitted toward the same destination as the destination address in step S2405, and therefore, [GP13] is assigned. Also, when the router 201 has the PS Symmetric NAT characteristic, the source port number of a P2P start request packet transmitted from any port number is considered to be translated into [GP14+Δ1] by the router 101. Thereby, a port number other than [LP1] needs to be set so as to assign [GP14+Δ1] no matter whether Symmetric NAT is AS or PS.

Also, the information notification phase and the P2P communication channel establishment phase of this embodiment are only for illustrative purposes. SIP messages and sequences different from those of FIG. 19 may be employed. For example, the 183 Session Progress responses of S2505 and S2506 may be removed. In this case, the message body (SDP) of FIG. 17 indicating a NAT information notification is inserted into the data portions of the 100 Trying responses of S2503 and S2504. Also, for example, after the INVITE requests of steps S2501 and S2502, the 180 Ringing responses of S2510 and S2511 may be transmitted instead of the 183 Session Progress responses of S2505 and S2506. In this case, the message body (SDP) of FIG. 17 indicating a NAT information notification is inserted into the data portions of the 180 Ringing responses of S2510 and S2511. The P2P communication channel establishing method of this embodiment can be achieved by other various sequences.

Also, the message formats of FIGS. 14 to 17 are examples including aminimal essential header, and may further include other optional headers, parameters or the like.

It has been assumed in each of the aforementioned embodiments, for the sake of simplicity of description, that the router 201 has the Cone NAT characteristic. Note that, also when the router 201 has NAT characteristics other than Cone NAT, the present invention can be similarly applied. Hereinafter, it will be briefly described that the present invention can be applied to all combinations of the NAT characteristics of the routers 101 and 201.

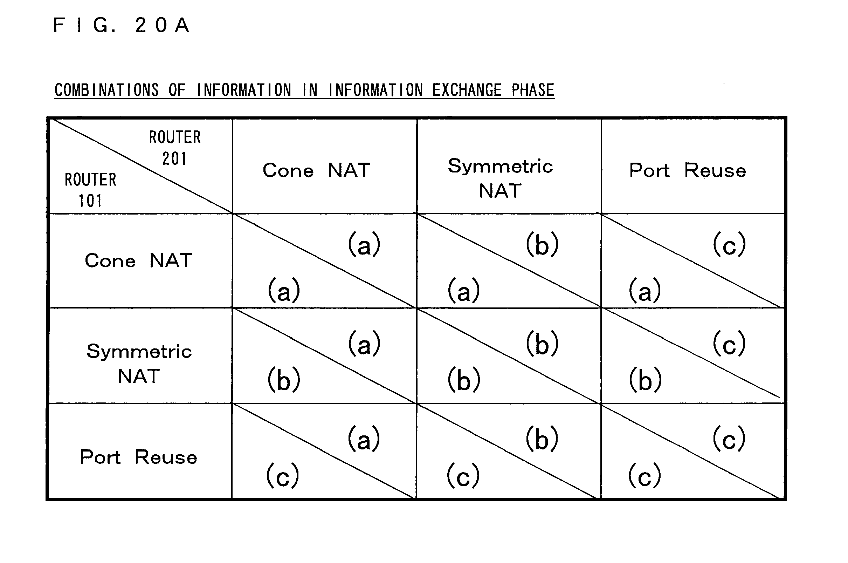

FIG. 20A is a table showing a combination of P2P ports notified by two routers for each combination of NAT characteristics of the routers during the information exchange phase.

In FIG. 20A, (a) to (c) correspond to items (a) to (c) that have been described above with reference to FIG. 6, respectively. For example, when the router 101 has Cone NAT and the router 201 has Symmetric NAT, the apparatus 10 connected to the router 101 notifies the apparatus 20 of the information of (a) using a NAT information notification, and the apparatus 20 notifies the apparatus 10 of the information of (b) using a NAT information notification.

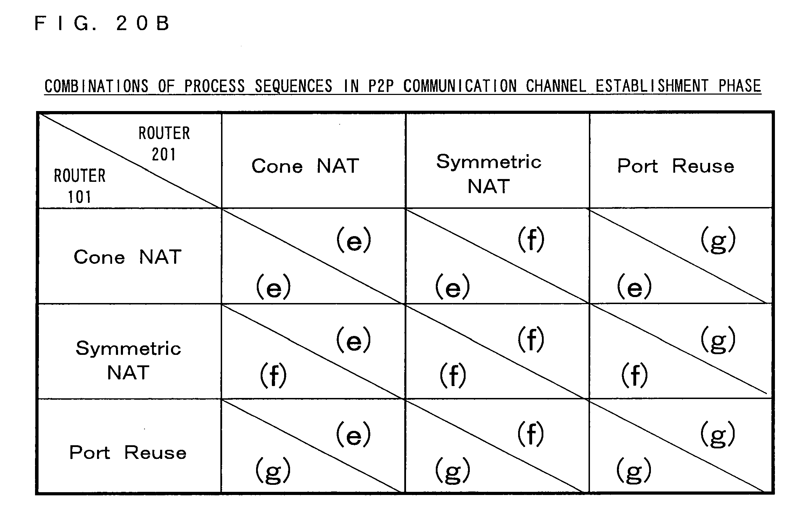

FIG. 20B is a table showing a combination of processes executed by apparatuses connected to two routers for each combination of NAT characteristics of the routers during the P2P communication channel establishment phase.

In FIG. 20B, (e), (f) and (g) correspond to the process of the apparatus 10 of FIG. 8, the process of the apparatus 10 of FIG. 9 and the process of the apparatus 10 of FIG. 10, respectively. For example, when the router 101 has Cone NAT and the router 201 has Symmetric NAT, the apparatus 10 connected to the router 101 executes the process of (e) (a process similar to that of the apparatus 10 of FIG. 8), and the apparatus 20 connected to the router 201 executes the process of (f) (a process similar to that of the apparatus 10 of FIG. 10), thereby making it possible to establish a P2P communication channel.

Although it has also been assumed above in each of the embodiments, for the sake of simplicity of description, that the apparatus 10 and the server 001 are connected to the global network 00 via the single router 101, the apparatus 10 and the server 001 may be connected via a plurality of routers. The same is true of the number of routers provided between the apparatus 20 and the server 001. This point will be hereinafter described.

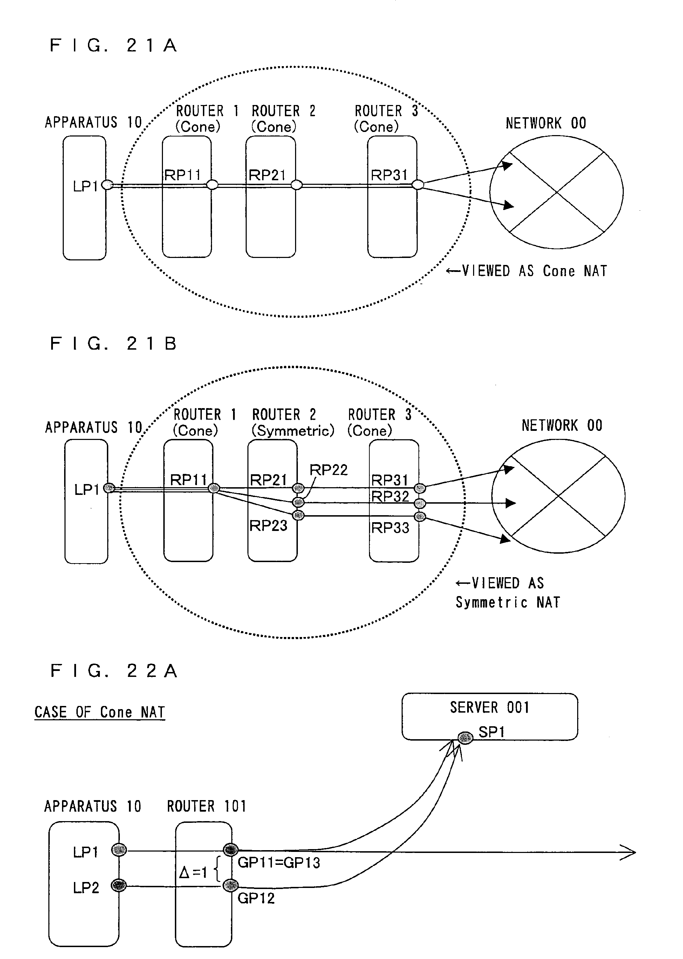

FIG. 21A is a diagram showing an example in which an apparatus is connected via three routers to a global network.

As shown in FIG. 21A, an apparatus 10 is connected to a global network 00 via three routers 1 to 3 having the Cone NAT characteristic. When the apparatus 10 transmits a packet whose source port number is set to be [LP1], the packet reaches the network 00 via a port RP11 of the router 1, a port RP21 of the router 2, and a port RP31 of the router 3. In this case, as viewed from a server connected to the global network 00, the apparatus 10 is apparently connected to the server via a single router having the Cone NAT characteristic.

FIG. 21B is a diagram showing another example in which an apparatus is connected via three routers to a global network.

As shown in FIG. 21B, an apparatus 10 is connected to a global network 00 via a router 1 having the Cone NAT characteristic, a router 2 having the Symmetric NAT characteristic, and a router 3 having the Cone NAT characteristic. When the apparatus 10 transmits a packet whose source port number is set to be [LP1], the packet reaches via a port [RP11] of the router 1 to the router 2. Since the router 2 has the Symmetric NAT characteristic, the router 2 assigns different ports [RP21], [RP22] and [RP23] to the received packet, and transfers the resultant packets to the router 3. Even when the router 3 has the Cone NAT characteristic, the packets having the different source port numbers are transferred via respective different ports of the router 3 to the global network. Therefore, as viewed from a server connected to the global network 00, the apparatus 10 is apparently connected to the server via a single router having the Symmetric NAT characteristic.

Thus, even when an apparatus and a server are connected via a plurality of routers, a P2P communication channel can be established between the two apparatuses by selecting a connection sequence based on an apparent NAT characteristic as viewed from the global network 00.

It has been assumed above in Embodiments 1 and 3 that, during the NAT characteristic check phase (FIGS. 4A and 18), an apparatus receives an address information check response with respect to an address information check request before transmitting the next address information check request. Moreover, alternatively, the next address information check request may be transmitted before waiting for the address information check response. Specifically, an apparatus may successively transmit four packets, i.e., the address information check requests 1 and 2, the P2P communication preparation packet, and the address information check request 3, and thereafter, may receive the address information check responses 1 to 3 from the server 001. When these four packets are successively transmitted during a considerably short period, the possibility that there is an interruption of a packet transmitted from another apparatus connected to the same router for the period during which the four packets are transmitted can be reduced. Therefore, it is possible to prevent the difference values Δ1 and Δ2 from changing from their respective original values. Therefore, the possibility that Cone NAT is erroneously determined as Symmetric NAT can be reduced.

Moreover, in view of suppression of erroneous determination, the accuracy of determination of the NAT characteristic may be improved by executing the NAT characteristic check phases two or more times. In this case, the port assignment interval can also be accurately measured.

Moreover, some NAT characteristics of a router can be easily determined by the following method.

There are many commercially available routers for home use that have a constant port assignment interval (e. g. , 1). When the port assignment interval thus has a constant value, the NAT characteristic can be determined by transmitting a P2P communication preparation packet while transmitting two address check requests. The reason will be described as follows.

FIG. 22A is a diagram showing a router that has a port assignment interval of 1 and has the Cone NAT characteristic. FIG. 22B is a diagram showing a router that has a port assignment interval of 1 and has the Symmetric NAT characteristic.

Initially, referring to FIG. 22A, when the router 101 has the Cone NAT characteristic, a port number [GP13] assigned to a P2P communication preparation packet is equal to either of port numbers [GP11] and [GP12] that are assigned to two address information check request packets. Therefore, a difference Δ between port numbers included in two address information check response packets returned from the server 001 is 1.

Next, referring to FIG. 22B, when the router 101 has the Symmetric NAT characteristic, a port number [GP13] assigned to a P2P communication preparation packet is different from both port numbers [GP11] and [GP12] of two address information check request packets. Therefore, a difference Δ between port numbers included in two address in formation check response packets returned from the server 001 is 2.

As described above, when a difference Δ between two port numbers acquired from two address information check response packets has a constant value (in this example, 1), it can be determined that the router 101 has the Cone NAT characteristic. When otherwise, it can be determined that the router 101 has the Symmetric NAT characteristic.

Note that, in order to implement the processes of FIGS. 22A and 22B, information about correspondence between an interval (difference Δ) between port numbers included in two address information check response packets and a NAT characteristic varying depending on the interval may be previously held in a storage unit (not shown) of the apparatus 10. For example, it is assumed in that, in the correspondence information, a difference Δ (1) is caused to correspond to the Cone NAT characteristic, and a difference Δ (2) is caused to correspond to the Symmetric NAT characteristic. In this case, by referencing the correspondence information, the apparatus 10 can determine that the NAT characteristic is Cone if the difference Δ is 1 and that the NAT characteristic is Symmetric if the difference Δ is 2.

Note that the functional blocks of the communication apparatus according to each of the embodiments above (FIGS. 2A and 2B) can also be implemented by causing a computer to execute a program that allows the computer to execute the aforementioned process procedures stored in a storage apparatus (a ROM, a RAM, a hard disk, etc.). The concept of this computer encompasses computers incorporated in electronic apparatuses, such as mobile apparatuses and the li ke. In this case, the programmay be executed after being stored in a storage apparatus via a recording medium or may be executed directly from a storage medium. The functional blocks of the communication apparatus according to each of the embodiments above may be implemented as an integrated circuit.

While the invention has been described in detail, the foregoing description is in all aspects illustrative and not restrictive. It is understood that numerous other modifications and variations can be devised without departing from the scope of the invention.

### INDUSTRIAL APPLICABILITY

The communication apparatus, the communication method and the communication system according to the present invention can check the NAT characteristic of a router by communicating with only a single server having a single IP address. Therefore, the present invention is, for example, useful for consumer electronics, communication apparatuses and the like that perform P2P communication between two apparatuses connected to different private networks.

## Claims

1. A communication apparatus which is connected to a server via a first relay apparatus having a NAT (Network Address Translation) function, comprising:
an address information check request transmitting unit for transmitting a plurality of address information check request packets whose source port numbers are set to be local port numbers different from each other of the communication apparatus and whose destination port numbers are set to be the same port number as that of each other, the same port number being a port number of the server, to the server, on a one-by-one basis;
a communication preparation request transmitting unit for transmitting a communication preparation packet whose source port number is set to be the same port number as the source port number of any of the plurality of address information check request packets, to a destination different from the server, after the address information check request transmitting unit transmits the first address information check request packet and before the address information check request transmitting unit transmits the final address information check request packet; and
an address information receiving unit for receiving the same number of address information check response packets as the number of the address information check request packets, the address information check response packets being returned from the server in response to the address information check request packets, and including relay port numbers translated from the source port numbers of the address information check request packets in the first relay apparatus.

2. The communication apparatus according to claim 1, further comprising:
a relay characteristic determining unit for determining a NAT characteristic of the first relay apparatus based on the relay port numbers included in the respective address information check response packets received by the address information receiving unit.

3. The communication apparatus according to claim 2,
wherein
the address information check request transmitting unit transmits, one for each:
a first address information check request packet whose destination port number is set to be the port number of the server and whose source port number is set to be a first local port number of the communication apparatus;
a second address information check request packet whose destination port number is the same as that of the first address information check request packet and whose source port number is set to be a second local port number of the communication apparatus different from the first local port number; and
a third address information check request packet whose destination port number is the same as that of the first address information check request packet and whose source port number is set to be a third local port number of the communication apparatus different from the first and second local port numbers,
the address information receiving unit receives:
a first address information packet returned from the server in response to the first address information check request packet and including a first relay port number of the first relay apparatus;
a second address information packet returned from the server in response to the second address information check request packet and including a second relay port number of the first relay apparatus; and
a third address information packet returned from the server in response to the third address information check request packet and including a third relay port number of the first relay apparatus, and
the relay characteristic determining unit calculates a first difference value from the first and second relay port numbers and a second difference value from the second and third relay port numbers, and based on comparison of the first and second difference values, determines the NAT characteristic of the first relay apparatus.

4. The communication apparatus according to claim 3,
wherein
the server is connected to a connection-destination communication apparatus via a second relay apparatus having the NAT function, and
the communication apparatus further comprises:
a relay information transmitting unit for predicting a first P2P relay port number which the first relay apparatus assigns to peer-to-peer communication with the connection-destination communication apparatus, based on the NAT characteristic of the first relay apparatus determined by the relay characteristic determining unit, and transmitting a first relay information packet including the predicted first P2P relay port number to the server;
a relay information receiving unit for receiving from the server a second relay information packet including a second P2P relay port number which the second relay apparatus assigns to peer-to-peer communication with the connection-destination communication apparatus; and
a communication control unit for transmitting a start request packet whose destination port number is set to be the second P2P relay port number included in the second relay information packet so as to request for the connection-destination communication apparatus to start peer-to-peer communication.

5. The communication apparatus according to claim 4,
wherein
the relay information transmitting unit, when the relay characteristic determining unit determines that the first and second difference values are equal to each other, transmits the first relay information packet including one of the first to third relay port numbers as the first P2P relay port number, and when the relay characteristic determining unit determines that the first and second difference values are not equal to each other, transmits the first relay information packet including as the first P2P relay port number a value obtained by summing the third relay port number and the smaller of the first and second difference values.

6. The communication apparatus according to claim 4,
wherein
the relay information transmitting unit, when the relay characteristic determining unit determines that the first relay port number matches the first local port number, transmits the first relay information packet including any local port number as the first P2P relay port number.

7. The communication apparatus according to claim 4,
wherein
the communication preparation request transmitting unit adjusts a TTL (Time To Live) value included in a header of the communication preparation packet so that the communication preparation packet reaches the first relay apparatus and does not reach the second relay apparatus.

8. The communication apparatus according to claim 4, further comprising:
a storage unit for holding the first and second difference values,
wherein, before start of peer-to-peer communication at the second time and thereafter, the relay characteristic determining unit determines the NAT characteristic of the first relay apparatus based on the first and second difference values held in the storage unit.

9. The communication apparatus according to claim 8,
wherein
the address information check request transmitting unit transmits a fourth address information check request packet whose destination port number is set to be the port number of the server and whose source port number is set to be a fourth local port number of the communication apparatus,
the address information receiving unit receives a fourth address information packet returned from the server in response to the fourth address information check request packet and including a fourth relay port number of the first relay apparatus, and
the relay information transmitting unit, when the relay characteristic determining unit determines the first and second difference values held in the storage unit are equal to each other, transmits the first relay information packet including the fourth relay port number as the first P2P relay port number, and when the relay characteristic determining unit determines that the first and second difference values held in the storage unit are not equal to each other, transmits the first relay information packet including as the first P2P relay port number a value obtained by summing the fourth relay port number and the smaller of the held first and second difference values.

10. The communication apparatus according to claim 8,
wherein
the communication apparatus, when determining that the first relay port number and the first local port number match each other, stores, into the storage unit, information indicating that the first relay port number and the first local port number match each other,
before start of peer-to-peer communication at the second time and thereafter, when the relay characteristic determining unit determines that the storage unit holds the information indicating that the first relay port number and the first local port number match each other, the relay information transmitting unit transmits the first relay information packet including any local port number as the first P2P relay port number.

11. The communication apparatus according to claim 2, further comprising:
a storage unit for previously holding information about correspondence between an interval between the relay port numbers included in the respective address information check response packets and a NAT characteristic varying depending on the interval,
wherein the address information check request transmitting unit transmits, one for each:
a first address information check request packet whose destination port number is set to be the port number of the server and whose source port number is set to be a first local port number of the communication apparatus; and
a second address information check request packet whose destination port number is the same as that of the first address information check request packet and whose source port number is set to be a second local port number of the communication apparatus different from the first local port number,
the address information receiving unit receives:
a first address information packet returned from the server in response to the first address information check request packet and including a first relay port number of the first relay apparatus; and
a second address information packet returned from the server in response to the second address information check request packet and including a second relay port number of the first relay apparatus, and
the relay characteristic determining unit determines a NAT characteristic corresponding to an interval between the received first and second relay port numbers, in the correspondence information, as the NAT characteristic of the first relay apparatus.

12. A communication method for allowing a communication apparatus which is connected to a server via a first relay apparatus having a NAT (Network Address Translation) function, to communicate with the server to determine a NAT characteristic of the first relay apparatus, the method comprising:
an address information check request transmitting step of transmitting a plurality of address information check request packets whose source port numbers are set to be local port numbers different from each other of the communication apparatus and whose destination port numbers are set to be the same port number as that of each other, the same port number being a port number of the server, to the server, on a one-by-one basis;
a communication preparation request transmitting step of transmitting a communication preparation packet whose source port number is set to be the same port number as the source port number of any of the plurality of address information check request packets, to a destination different from the server, after the first address information check request packet is transmitted and before the final address information check request packet is transmitted in the address information check request transmitting step;
an address information receiving step of receiving the same number of address information check response packets as the number of the address information check request packets, the address information check response packets being returned from the server in response to the address information check request packets, and including relay port numbers translated from the source port numbers of the address information check request packets in the first relay apparatus; and
a relay characteristic determining step of determining the NAT characteristic of the first relay apparatus based on the relay port numbers included in the respective address information check response packets received in the address information receiving step.

13. A communication system comprising:
a server;
a first relay apparatus having a NAT (Network Address Translation) function;
a second relay apparatus having the NAT function;
a first communication apparatus connected via the first relay apparatus to the server; and
a second communication apparatus connected via the second relay apparatus to the server,
wherein each of the first and second communication apparatuses comprising:
an address information check request transmitting unit for transmitting a plurality of address information check request packets whose source port numbers are set to be local port numbers different from each other of the each of the communication apparatuses and whose destination port numbers are set to be the same port number as that of each other, the same port number being a port number of the server, to the server, on a one-by-one basis;
a communication preparation request transmitting unit for transmitting a communication preparation packet whose source port number is set to be the same port number as the source port number of any of the plurality of address information check request packets, to a destination different from the server, after the address information check request transmitting unit transmits the first address information check request packet and before the address information check request transmitting unit transmits the final address information check request packet;
an address information receiving unit for receiving the same number of address information check response packets as the number of the address information check request packets, the address information check response packets being returned from the server in response to the address information check request packets, and including relay port numbers translated from the source port numbers of the address information check request packets in the relay apparatus connected to the each of the communication apparatuses; and
a relay characteristic determining unit for determining a NAT characteristic of the first relay apparatus based on the relay port numbers included in the respective address information check response packets received by the address information receiving unit, and
the server comprises:
an address information checking unit for extracting the relay port numbers included in the address information check request packets transmitted from the first and second respective communication apparatuses; and
an address information transmitting unit for transmitting address information check request response packets including the extracted relay port numbers.

14. A communication system comprising:
a server;
a first relay apparatus having a NAT (Network Address Translation) function;
a second relay apparatus having the NAT function;
a first communication apparatus connected via the first relay apparatus to the server; and
a second communication apparatus connected via the second relay apparatus to the server,
wherein each of the first and second communication apparatuses comprising:
an address information check request transmitting unit for transmitting a plurality of address information check request packets whose source port numbers are set to be local port numbers different from each other of the each of the communication apparatuses and whose destination port numbers are set to be the same port number as that of each other, the same port number being a port number of the server, to the server, on a one-by-one basis; and
a communication preparation request transmitting unit for transmitting a communication preparation packet whose source port number is set to be the same port number as the source port number of any of the plurality of address information check request packets, to a destination different from the server, after the address information check request transmitting unit transmits the first address information check request packet and before the address information check request transmitting unit transmits the final address information check request packet, and
the server comprises an address information checking unit for determining NAT characteristics of the first and second respective relay apparatuses based on relay port numbers translated from the source port numbers of the address information check request packets in the first and second respective relay apparatuses.
